# EUROPEAN PATENT SPECIFICATION

(11) **EP 4 623 773 B1**
(45) Date of publication and mention of the grant of the patent: **02.09.2026**
(21) Application number: 24197939.2
(22) Date of filing: 02.09.2024
(51) Int. Cl.: A47J 42/08

(54) **HIGH-PRECISION EXTERNALLY-ADJUSTABLE COFFEE GRINDER**
HOCHGENAUE, EXTERN VERSTELLBARE KAFFEEMÜHLE
MOULIN À CAFÉ À RÉGLAGE EXTERNE DE HAUTE PRÉCISION

(30) Priority: 27.03.2024 CN 202420617840 U; 14.05.2024 CN 202421047763 U; 14.05.2024 CN 202421046949 U; 31.05.2024 CN 202421235494 U; 31.05.2024 CN 202421235040 U
(43) Date of publication of application: 01.10.2025
(73) Proprietor: TANZHEXINGJI (Shanghai) Network Technology Co., Ltd, Shanghai (CN)
(72) Inventor: SHA, Xiaofei, VG1110 Road Town, Tortola (VG)
(74) Representative: JD&P Patent Attorneys Joanna Dargiewicz & Partners

(56) References cited:
- AU-A1- 2018 387 822
- AU-A1- 2022 224 835
- CN-A- 107 981 728
- CN-A- 109 431 316
- US-A1- 2023 284 818

## Description

### TECHINCAL FIELD

The present invention relates to the technical field of grinder devices, and in particular to a high-precision externally-adjustable coffee grinder.

### BACKGROUND

At present, the basic function of an electric coffee grinder includes a function of adjusting the coarseness of coffee powder, so that users can prepare different kinds of coffee, such as espresso, mocha, pour-over and French press, by adjusting the coarseness of the coffee powder. The adjusting structure of the electric coffee grinder in the current market usually includes two forms. One form is to set a circle of adjusting ring on the main body of the coffee grinder for convenient adjustment. The adjusting ring directly drives a driving piece to move up and down to adjust a grinding disc gap according to a screw rod principle. Since the adjusting range of the grinding disc gap of the coffee grinder is small and usually within 2 mm, a one-turn adjusting ring is adjusted, and the adjusting precision of the driving piece in the limited rotation angle range is poor. The other form is to improve the adjusting precision through a multi-turn adjusting piece, but the adjusting apparatus has the problem that due to multi-turn adjustment, users need to pay attention not only to the rotation scales on the adjusting piece, but also to the number of turns of the adjusting piece when determining the adjusting gears, which is very easy to be confused when consumers use the adjusting apparatus.

In addition, there are two common electric coffee grinders for adjusting the powder coarseness in the market. One is a downward-adjusting coffee grinder, and the other one is an upward-adjusting coffee grinder. In the downward-adjusting coffee grinder, the position of a movable cutterhead is adjusted through rotation of an adjusting knob in threaded connection with a mounting shaft, and the adjusting knob is arranged at a lower end of the movable cutterhead, which has the problem of inconvenient coarseness adjusting operation and use.

AU 2022 224 835 A1 relates to a coffee bean grinder, comprising a housing assembly, a shaft component, and a securing member. The housing assembly comprises a housing, a bearing component, and an outer grinding member. The bearing component is disposed in the housing. The outer grinding member is assembled in the housing. The outer grinding member is disposed below the bearing component. The shaft component is assembled in the housing. The shaft component comprises a shaft member, an inner grinding member, and an elastic member. One end of the shaft member comprises a connecting shaft and a shaft cap. The shaft cap is disposed at the connecting shaft. An outer diameter of a bottom end of the shaft cap is greater than an outer diameter of the connecting shaft. The inner grinding member is disposed at the other end of the shaft member. One end of the shaft member passes through the elastic member and the bearing component in order. The elastic member is disposed between the inner grinding member and the bearing component, and two ends of the elastic member support the inner grinding member and the bearing component respectively. The inner grinding member and the outer grinding member are correspondingly disposed, and a grinding gap exists between the inner grinding member and the outer grinding member. The shaft member drives the inner grinding member to rotate relative to the outer grinding member for performing grinding through the cooperation of the inner grinding member and the outer grinding member. The cones are manually adjustable cones wherein the axially fixed nut is adjusted directly.

To solve the problem in the downward-adjusting coffee grinder, the upward-adjusting coffee grinder researched and developed in the prior art is provided with an upper adjusting knob, the adjusting knob is in threaded connection with a shell, the adjusting knob and a motor mounting rack abut against each other, and the adjusting knob is rotated to drive the motor mounting rack and the movable cutterhead connected thereto to move up and down. Although the technical defect that the downward-adjusting coffee grinder is inconvenient in adjusting operation is overcome, the adjusting knob is required to drive a motor to move up and down during adjustment, so it is necessary to set the motor mounting rack as a movable structure, the motor moves together with the grinding disc, and the movement of the motor causes fatigue and gradual displacement of the adjusting structure, thereby affecting the stability of the bean powder coarseness.

To solve at least one of the above problems, the present invention provides a new coffee grinder adjusting structure.

### SUMMARY

According to a first aspect, one of the objectives of the present invention is to provide a high-precision externally-adjustable coffee grinder, which improves the precision of granularity adjustment based on single-turn adjustment of an adjusting ring. Compared with a one-turn adjusting coffee grinder in the prior art, the external adjusting ring of the present invention has more adjusting stages. The advantages of convenient adjustment of the externally-adjustable coffee grinder and clear scale indication of a one-turn coffee grinder are retained, and the problem of low precision of a one-turn adjusting coffee grinder in the prior art is solved.

The present invention provides a high-precision externally-adjustable coffee grinder, including a main housing, a grinding assembly and a coarseness adjusting structure, where the coarseness adjusting structure is configured to adjust a bean-grinding gap of the grinding assembly; the grinding assembly includes an internal grinding disc and an external grinding disc; the coarseness adjusting structure includes:
an external adjusting ring, rotating relative to the main housing, the external adjusting ring including an internal toothed ring,
an internal driving ring, the internal driving ring and the external adjusting ring being arranged coaxially, and the internal driving ring including an external toothed ring, and
a transmission gear, the internal toothed ring of the external adjusting ring being engaged with an external toothed ring of the internal driving ring through the transmission gear; and

for the lifting rod, the internal driving ring drives the internal grinding disc or the external grinding disc of the grinding assembly through the lifting rod to ascend and descend to adjust the gap.

In one embodiment, the reduction ratio of the external adjusting ring to the internal driving ring is less than or equal to 1:1.4.

In one embodiment, the reduction ratio of the external adjusting ring to the internal driving ring is less than or equal to 1:1.6.

In one embodiment, the reduction ratio of the external adjusting ring to the internal driving ring is less than or equal to 1:1.6 and greater than or equal to 1:3.

In one embodiment, the external adjusting ring is arranged in fit with the main housing, and adjusting scales are distributed circumferentially; a mounting bracket is arranged in the main housing; the external adjusting ring is provided with a rolling groove; and the mounting bracket is provided with a first bead assembly in rolling fit with the rolling groove.

In one embodiment, the mounting bracket is further provided with a second bead assembly in fit with the internal toothed ring or a gear groove of the external adjusting ring, and the gear groove includes several arc-shaped grooves arranged circumferentially.

In one embodiment, the grinding assembly includes an external grinding disc and an internal grinding disc which are sleeved with each other, the lifting rod is a driving sleeve rod, the driving sleeve rod is configured to drive the external grinding disc or the internal grinding disc to move axially, the mounting bracket is arranged in the main housing, the driving sleeve rod and the mounting bracket are arranged in a sliding manner, the driving sleeve rod is restricted from rotating in the main housing, the driving sleeve rod is in threaded connection with the internal driving ring, and the driving sleeve rod is driven to move up and down axially when the external adjusting ring drives the internal driving ring to rotate.

In one embodiment, a driving motor is fixed on the mounting bracket, the internal grinding disc is provided with a connecting shaft, an output end of the driving motor is connected to the connecting shaft, the driving motor drives the connecting shaft to rotate, a grinding disc bracket is arranged in the main housing, the connecting shaft is sleeved on the grinding disc bracket, the connecting shaft and the output end of the driving motor are arranged in an axial sliding manner, and one end of the driving sleeve rod is axially and fixedly connected to the connecting shaft.

In one embodiment, a thrust spring is mounted between the internal grinding disc and the connecting shaft, a flange is arranged on a lower section of the connecting shaft, and a lower end face of the flange and an upper end face of the internal grinding disc abut against the thrust spring mutually.

In one embodiment, the driving sleeve rod includes a connecting base and is connected to the connecting shaft through the connecting base, a first bearing is arranged on the connecting base, the connecting shaft is rotatably sleeved in the first bearing, a groove is formed in an outer wall of the connecting shaft, a snap spring is clamped in the groove, the snap spring abuts against an upper end face of the first bearing of the driving sleeve rod, the thrust spring is sleeved on the connecting shaft, one end of the thrust spring abuts against the internal grinding disc, one end of the thrust spring and the grinding disc bracket abut against each other, and the thrust spring provides a downward thrust of the connecting shaft.

In one embodiment, a driving motor mounting cavity is formed in the driving sleeve rod, a driving motor is fixed in the driving motor mounting cavity of the driving sleeve rod, the internal grinding disc is provided with a connecting shaft, an output end of the driving motor is fixedly connected to the connecting shaft, and the driving motor drives the connecting shaft to rotate.

In one embodiment, the external adjusting ring is rotatably connected to a mounting bracket, a gear base is arranged on the mounting bracket, and the transmission gear and the gear base are arranged rotationally.

In one embodiment, the external adjusting ring is provided with a rolling groove, the mounting bracket is provided with a first bead assembly in rolling fit with the rolling groove, and the mounting bracket is further provided with a second bead assembly in fit with an internal toothed ring of the external adjusting ring.

In one embodiment, the mounting bracket is further provided with a second bead assembly in fit with a gear groove of the external adjusting ring, and the gear groove includes several arc-shaped grooves arranged circumferentially.

In one embodiment, a mounting bracket and a grinding disc bracket are arranged in the main housing, the mounting bracket and the grinding disc bracket are respectively integrally formed, the mounting bracket is fixedly connected to the grinding disc bracket, the driving sleeve rod is arranged in the mounting bracket in an axial sliding manner, the grinding disc bracket includes an external grinding disc mounting hole and a connecting shaft mounting hole, two coaxially arranged second bearings are arranged in the connecting shaft mounting hole, and the connecting shaft penetrates through the second bearings.

According to a second aspect, one of the objectives of the present invention is to provide an electric coffee grinder with a simple structure and excellent use stability, thereby improving the adjusting precision and having stronger market competitiveness.

A motor is fixed in a main housing, an adjusting knob is arranged at an upper end of the main housing, a rotating motion is converted into a lifting motion of a lifting rod by a linkage assembly, a first grinding disc is driven by the lifting rod to move and adjust, and an adjusting structure skips the motor to avoid the zero shift of the grinding disc caused by long-time use of the motor, so that the stability of the grinding disc during operation can be considered while the adjusting operation of the grinding disc is facilitated.

An electric coffee grinder includes a main housing, a driving motor fixedly arranged on the main housing, a connecting shaft connected to an output shaft of the driving motor in an axial sliding manner, and an internal grinding disc connected to the connecting shaft, where an external grinding disc in fit with the internal grinding disc for grinding is further arranged in the main housing, an upper end of the main housing is rotatably connected with an adjusting knob, a bean inlet channel for beans to pass through is formed between an inner wall of the main housing and the motor, an opening is formed at the upper end or a side end of the main housing, a lifting rod is arranged in the main housing, one end of the lifting rod is in fit with the adjusting knob through a linkage assembly, the other end of the lifting rod is connected to the connecting shaft, the adjusting knob drives the lifting rod through the linkage assembly to move up and down relative to the main housing, and a gap between the internal grinding disc and the external grinding disc changes when the lifting rod moves up and down. The main housing is provided with the opening, and the bean inlet channel is formed in the inner wall of the main housing, so that the internal space of the main housing can be reasonably utilized to form a bean storage space. It is unnecessary to additionally provide a bean storage space on a machine body, so that the overall volume of the bean grinder is miniaturized and the structure is simplified. The opening is further arranged on an upper part of the main housing. Such a design can allow beans to be added directly from the top, thereby being more portable in use and conforming to ergonomics and the use habits of users.

In one embodiment, the lifting rod is provided with a thread, the linkage assembly includes an internal driving ring in threaded connection with the lifting rod, and the adjusting knob drives the lifting rod to move axially when driving the internal driving ring to rotate. The ascending and descending of the lifting rod are controlled through multi-turn threads, and the adjusting knob can set the adjusting gears in more stages, so that the adjusting precision can be greatly improved.

In one embodiment, the adjusting knob and the internal driving ring are fixed, the internal driving ring is in threaded sleeving connection with the lifting rod, the lifting rod is provided with a penetrating hole formed axially, the lifting rod is coaxially sleeved outside the motor, the motor is fixedly connected to the interior of the main housing through a mounting base, and the lifting rod is provided with an avoidance groove for the mounting base to pass through.

In one embodiment, the adjusting knob is provided with an internal toothed ring, the internal driving ring is further provided with an external toothed ring, the linkage assembly further includes a transmission gear mutually engaged with the adjusting knob and the internal driving ring, the transmission gear is a reduction gear, and the internal toothed ring is engaged with the external toothed ring through the transmission gear.

In one embodiment, a zero adjusting nut is arranged at an upper end of the lifting rod, and the zero adjusting nut is configured to indicate the height position of the lifting rod.

In one embodiment, a conical surface in fit with the opening is formed at an upper end of the zero adjusting nut, and the conical surface is a guide inclined surface for guiding beans to enter the bean inlet channel.

In one embodiment, the adjusting knob is provided with an adjusting scale indication, and the adjusting scale indication is distributed circumferentially in 300°-360°.

In one embodiment, the lifting rod includes a connecting base, and a first bearing for being in rotatable sleeving connection with the connecting shaft is arranged on the connecting base.

In one embodiment, a grinding disc bracket is arranged in the main housing, a lower base is arranged at a lower end of the grinding disc bracket, an accommodating groove for limiting the external grinding disc up and down is formed between the grinding disc bracket and the lower base, a stabilizing frame is further arranged in the main housing, the stabilizing frame is arranged below the connecting base of the lifting rod, the connecting shaft is sleeved in the stabilizing frame, the stabilizing frame is provided with a second bearing, the connecting shaft and the second bearing are arranged in a sliding manner, and the grinding disc bracket and the stabilizing frame are integrally formed.

In one embodiment, the lower base is provided with a powder outlet guide retaining ring, an inner side surface of the powder outlet guide retaining ring is an arc surface radially enlarged from top to bottom, a lower end face of the lower base is provided with a mounting groove connected to a powder receiving box, and the position of the mounting groove is higher than the powder outlet guide retaining ring.

In one embodiment, a thrust spring is mounted between the internal grinding disc and the connecting shaft, a flange is arranged at a lower section of the connecting shaft, and an upper end face of the flange and an upper end face of the internal grinding disc abut against the thrust spring mutually.

According to a third aspect, one of the objectives of the present invention is to provide a grinding disc bracket of a coffee grinder, and the coffee grinder using the grinding disc bracket, so that the concentricity of a grinding disc assembly is high, and the grinding coarseness is uniform.

The grinding disc bracket is integrally formed, the grinding disc bracket is provided with an external grinding disc mounting hole and a connecting shaft mounting hole, and the connecting shaft mounting hole at least includes a bearing mounting position. The grinding disc bracket is integrally formed, so that corresponding bracket parts of the connecting shaft mounting hole and the external grinding disc mounting hole are not required to be assembled again, and the assembling error is reduced.

In one embodiment, the grinding disc bracket is made of a metal or alloy material, and the alloy material includes aluminum alloy. The metal material can achieve a good bearing effect, so that the overall strength of the grinding disc bracket is higher. The manufacturing precision of the alloy material is high, the alloy material can be repeatedly processed to ensure the precision of the grinding disc bracket, and the defect of deformation of an injection molding piece in the injection molding and demolding processes can be effectively avoided, so that the concentricity of the connecting shaft mounting hole and the external grinding disc mounting hole can be further improved, and the lightweight of the grinding disc bracket can be achieved.

In one embodiment, a hole wall of the bearing mounting position and a hole wall of the connecting shaft mounting hole are arranged in a continuous straight line.

In one embodiment, the bearing mounting position includes a first bearing mounting position and a second bearing mounting position, second bearings are arranged at the first bearing mounting position and the second bearing mounting position, and a positioning ring is arranged between the two second bearings.

In one embodiment, the external grinding disc mounting hole and the connecting shaft mounting hole are formed by a milling device on one side through milling.

In one embodiment, the grinding disc bracket includes a lower mounting cylinder and an upper mounting cylinder, the external grinding disc mounting hole is formed in the lower mounting cylinder, the connecting shaft mounting hole is formed in the upper mounting cylinder, the upper mounting cylinder and the lower mounting cylinder are connected through connecting ribs, and a bean inlet channel for communicating with the lower mounting cylinder is formed among several connecting ribs.

In one embodiment, an upper end face of the lower mounting cylinder extends to form a first protruded ring, and an upper end face of the first protruded ring forms a smooth and downward inclined guide curved surface at the bean inlet channel.

In one embodiment, a step is formed at a position where the first protruded ring is connected to the lower mounting cylinder, a straight line section is arranged on an external ring surface of the first protruded ring, and the straight line section is provided with a mounting hole.

In one embodiment, a fastener mounting groove penetrating through a lower end face of a mounting bracket is formed in a hole wall of the external grinding disc mounting hole.

In one embodiment, a part below the lower mounting cylinder extends to form a second protruded ring, an external grinding disc mounting hole is surrounded by a hole wall of the second protruded ring, a step is formed at a position where the second protruded ring is connected to the lower mounting cylinder, and the lower mounting cylinder is provided with a mounting fastening hole at the step.

The present invention further provides the coffee grinder of the grinding disc bracket according to any one of the above.

According to a fourth aspect, one of the objectives of the present invention is to provide a bean bin cover of an electric coffee grinder, and a coffee grinder using the bean bin cover of the electric coffee grinder, so that the bean bin cover is convenient to open and close, simple in structure, and not easy to lose.

A bean bin cover of an electric bean grinder includes a bean bin cover bracket, the bean bin cover bracket is provided with a through bean inlet channel, the bean bin cover bracket is connected to a cover plate for closing the bean inlet channel, a bean inlet through hole is formed in the cover plate, the bean bin cover bracket includes a first height position and a second height position, a bean feeding gap communicating with the bean inlet channel is formed between the bean inlet through hole of the cover plate and the bean bin cover bracket when the cover plate is located at the first height position, and the bean inlet through hole of the cover plate abuts against the bean bin cover bracket to close the bean inlet channel when the cover plate is located at the second height position.

In one embodiment, the cover plate includes a guide plate for covering the bean inlet channel, and the guide plate forms an arc-shaped guide surface sinking radially from the outside to the bean inlet through hole.

In one embodiment, the cover plate is provided with a washer at a lower end of the bean inlet through hole, and the washer is made of a deformable resilient material.

In one embodiment, the cover plate includes a guide plate for covering the bean inlet channel, the guide plate is bent towards an inner side and extends at the position of the bean inlet through hole to be provided with a connecting portion, the washer is provided with a connecting groove in fit with the connecting portion, and the washer is connected to the connecting portion through the connecting groove.

In one embodiment, the cover plate and the mounting bracket are connected in a sliding manner and/or a threaded manner.

In one embodiment, the cover plate is connected to the bean bin cover bracket in a sliding manner, the cover plate or the bean bin cover bracket is provided with a sliding groove, the corresponding bean bin cover bracket or cover plate is provided with a sliding block, the sliding groove is an axially extending linear groove or a spirally extending inclined groove, and one end of the sliding groove close to the first height position laterally extends to form a second positioning groove.

In one embodiment, the cover plate is connected to the bean bin cover bracket in a sliding manner, a bead assembly is arranged on the mounting bracket or cover plate, and a positioning groove matched with the bead assembly is formed in the corresponding cover plate or bean bin cover bracket.

In one embodiment, there are two bead assemblies or/and positioning grooves, respectively and correspondingly arranged at the first height position and the second height position.

In one embodiment, the bean bin cover bracket is of a cylindrical structure surrounded by an external ring and an internal ring, a bean inlet channel is formed between the internal ring and the external ring, the cover plate further includes a connecting sleeve in sleeving connection with the external ring, the connecting sleeve can ascend and descend relative to the external ring, and the bean inlet channel and the internal ring are arranged in fit with each other.

The present invention provides a coffee grinder including the bean bin cover according to any one of the above.

In one embodiment, a motor mounting base is arranged in the main housing, the motor mounting base is provided with a motor mounting cavity at an axial position, the bean bin cover bracket is fixedly connected to the motor mounting base, the axis of the mounting bracket forms an arc-shaped cover body for covering the motor mounting cavity, the bean inlet channel of the bean bin cover bracket surrounds the arc-shaped cover body, and the bean inlet through hole of the cover plate abuts against the arc-shaped cover body to close the bean inlet channel when the cover plate is located at the second height position.

According to a fifth aspect, one of the objectives of the present invention is to provide a motor mounting bracket for providing strong support for an adjusting structure and a driving structure of an upward-adjusting coffee grinder, so that the structure of the coffee grinder is compact and miniaturized.

A motor mounting bracket includes an internal supporting ring, a positioning block is arranged on an inner side wall of the internal supporting ring, a mounting disc for mounting a motor assembly is arranged on the positioning block, and a space is reserved between the mounting disc and the internal supporting ring. In this way, an extending sheet of the lifting rod of the coffee grinder can pass through the space. The extending sheet abuts against the positioning block in a rotation direction and the positioning block can restrict the lifting rod from rotating, so when the adjusting knob is rotated, the lifting rod will rotate relative to an adjusting gear and ascend and descend under the action of the thread, thereby controlling the ascending and descending of a movable grinding disc following the lifting rod, adjusting a gap between the movable grinding disc and a fixed grinding disc, and adjusting the powder coarseness. In this process, it is unnecessary to move the positions of the motor mounting bracket and the motor.

In one embodiment, at least two positioning blocks are provided and connected to a mounting disc, and the positioning blocks extend along an axial direction of the internal supporting ring. The positioning blocks extend along the axial direction of the internal supporting ring, so that the positioning blocks and the extending sheet of the lifting rod can have a long contact surface, the eccentric lifting rod caused by local contact can be avoided, and the larger contact surface can prevent damage to parts caused by large stress pressure intensity.

In one embodiment, the mounting disc is circular, a square positioning groove is formed in an upper side of the mounting disc, the center of the positioning groove is over against the circle center of the mounting disc, four corners of the positioning groove all exceed the mounting disc to form an edge-breaking structure, and a central through hole penetrating through the mounting disc and four peripheral through holes distributed along the periphery of the central through hole are formed at the bottom of the positioning groove. The motor assembly is positioned cooperatively by the positioning groove, the central through hole structure is configured to pass through an output shaft of the motor assembly, and the peripheral through hole is configured to be in fit with a bolt to fix the motor assembly.

In one embodiment, an inner surface of the positioning block is a concave arc-shaped surface coaxial with the internal supporting ring, a first inclined guide surface is formed at the top of the positioning block, the first inclined guide surface inclines towards the center of the internal supporting ring from top to bottom, an avoidance groove is formed in an inner side wall of the positioning block close to the upper end, a second inclined guide surface inclining towards the center of the internal supporting ring from top to bottom is formed on an inner side wall of the avoidance groove close to the upper end, a square first through hole is formed in the inner side wall of the avoidance groove and located below the second inclined guide surface, a second through hole is formed in the inner side wall of the avoidance groove and located below the first through hole, the second through hole includes two longitudinal holes close to two side walls of the avoidance groove and a transverse hole located at lower ends of the longitudinal holes and connected to the two longitudinal holes, the inner side wall of the internal supporting ring is cut by the second through hole to form a clamping block with a deformable and movable lower end, and an inner side wall of the lower end of the clamping block inclines towards the center of the internal supporting ring from top to bottom. The concave arc-shaped surface is configured to cooperatively position the motor assembly. The first inclined guide surface is in fit with the second inclined guide surface to be convenient for the motor assembly to enter the internal supporting ring during mounting. The second through hole is provided cooperatively to form a deformable and movable clamping block structure, so that a protruded block on the motor assembly can extrude the clamping block outward to be deformed and pushed away during mounting of the motor assembly. Then, the clamping block will be reset and in fit with the protruded block on the motor assembly to fix the motor assembly, so that the motor assembly cannot move optionally after being mounted, the position of the output shaft of the motor assembly can be adjusted conveniently, and the motor assembly will not move in the process of locking the position of the motor assembly by the bolt after adjustment.

In one embodiment, the position of a lower edge of a first through hole in a positioning block adjacent to a first connecting portion is lower than the position of an upper edge of a second through hole, and an upper end of the clamping block structure forms a thinner structure, so that the clamping block has stronger deformability and the mounting of the motor assembly is facilitated. The position of a lower edge of a first through hole in a positioning block adjacent to a second connecting portion is higher than the position of an upper edge of a second through hole. In this way, the clamping block is more difficult to deform, and the positioning effect after the motor assembly is mounted is stronger.

In one embodiment, the high-precision externally-adjustable coffee grinder further includes an internal supporting ring located outside the internal supporting ring, and a first connecting portion and a second connecting portion for connecting the internal supporting ring and the external supporting ring; and a blanking channel is formed in an area between the internal supporting ring and the external supporting ring where the first connecting portion and the second connecting portion are not arranged. The blanking channel is formed between the internal supporting ring and the external supporting ring, so that coffee beans can enter grinding working areas of the internal grinding disc and the external grinding disc.

In one embodiment, the external supporting ring is provided with an opening at the first connecting portion to serve as a battery mounting groove, and is provided with an opening at the second connecting portion to serve as a control module mounting groove; a wire-passing groove communicated from the battery mounting groove to the control module mounting groove is formed in a side surface of the external supporting ring, the wire-passing groove extends in a horizontal direction, and a downward curved surface is formed on a lower side surface of one end of the wire-passing groove close to the battery mounting groove; four protruded blocks are uniformly distributed and formed at the upper end of the external supporting ring circumferentially, and a large circular hole and a small circular hole located above the large circular hole are formed in each of the protruded blocks. The battery mounting groove is configured to mount a battery assembly, the control module mounting groove is configured to mount a control module assembly, the wire-passing groove is configured to connect a wire of the battery assembly to the control module assembly, and the large circular hole and the small circular hole are used for resilient abutting pieces.

In one embodiment, the first connecting portion includes first side connecting plates forming left and right side walls of the battery mounting groove, a first upper connecting plate forming an upper wall of the battery mounting groove, a first lower connecting plate forming a lower wall of the battery mounting groove, and a first bottom plate formed by the downward extension of part of the internal supporting ring and forming one part of a bottom surface of the battery mounting groove; the first upper connecting plate is horizontally arranged, first reinforcing ribs are formed on an upper end face of the first upper connecting plate close to two sides, and the first reinforcing ribs are connected to the internal supporting ring and the external supporting ring; a cylindrical gear base, a gear shaft located above the gear base and a first guide cone body located above the gear shaft are formed on a middle part of the first upper connecting plate, and the outer diameter of the gear shaft is less than that of the gear base; the first guide cone body is of a big-end-down conical structure, the outer diameter of a lower end of the first guide cone body is less than that of the gear shaft, and an internal threaded hole is formed at the center of an upper end face of the first guide cone body; an upper end face of the gear base is flush with an upper end face of the external supporting ring, and a side surface of the gear base is connected to the external supporting ring; a horizontal battery baffle is formed on the first bottom plate, charging module mounting columns are formed at positions where the first bottom plate is connected to the first side connecting plates on two sides, the positions of the charging module mounting columns are lower than the position of the battery baffle, and a threaded hole is formed at the center of each of the charging module mounting columns; and charging module baffles are formed on the two first side connecting plates close to the lower end, and a charging module positioning column is formed on a middle part of the first lower connecting plate. The transmission gear is mounted by the gear shaft, and the first guide cone body is configured to be in fit with the main housing to be aligned and fixed with a motor mounting rack. The battery baffle is configured to limit the battery from moving down and occupying the space of the charging module, the charging module mounting column is configured to be in fit with a bolt to mount and fix the charging module, and the charging module baffle and the charging module positioning column can play a role in limiting the position of the charging module.

In one embodiment, the second connecting portion includes second side connecting plates forming left and right side walls of the control module mounting groove, a second upper connecting plate forming an upper wall of the control module mounting groove, a second lower connecting plate forming a lower wall of the control module mounting groove, and a second bottom plate formed by the downward extension of part of the internal supporting ring and forming one part of a bottom surface of the control module mounting groove; the second upper connecting plate is arranged horizontally, second reinforcing ribs are formed on an upper end face of the second upper connecting plate close to two sides, and the second reinforcing ribs are connected to the internal supporting ring and the external supporting ring; a connecting column is formed on a middle part of the second upper connecting plate, a side surface of the connecting column is connected to the external supporting ring, a second guide cone body is formed at an upper end of the connecting column, the second guide cone body is of a big-end-down conical structure, the outer diameter of a lower end of the second cone body is less than that of the connecting column, an internal threaded hole is formed at the center of an upper end face of the second guide cone body, and the second guide cone body is configured to be in fit with the main housing to be aligned and fixed with a motor mounting rack; a horizontally extending upper control module baffle is formed in the control module mounting groove and between the first through hole and the second through hole, a horizontally extending middle control module baffle is formed on a middle part in the control module mounting groove, a horizontally extending lower control module baffle is formed in the control module mounting groove close to a lower part, and the middle part of the middle control module baffle and the lower control module baffle is connected to a longitudinally extending control module longitudinal baffle; and an upper control module mounting column is formed on a bottom surface of the control module mounting groove and between the upper control module baffle and the middle control module baffle, and a lower control module mounting column is formed on the bottom surface of the control module mounting groove close to the lower end.

### BRIEF DESCRIPTION OF THE DRAWINGS

FIG. 1 is a schematic diagram of an overall structure according to one embodiment of the present invention;
FIG. 2 is a schematic sectional view of mounting of a linkage assembly structure according to one embodiment of the present invention;
FIG. 3 is a schematic sectional view of mounting of a linkage assembly structure according to one embodiment of the present invention;
FIG. 4 is a structural schematic diagram of a coarseness adjusting structure according to one embodiment of the present invention;
FIG. 5 is a structural schematic diagram a structural schematic diagram
FIG. 6, a schematic diagram of an enlarged structure at a position A in FIG. 5 according to the present invention;
FIG. 7 is a structural schematic diagram of one external adjusting ring according to the present invention;
FIG. 8 is a schematic diagram of an overall structure of one embodiment with a lifting bean bin cover according to the present invention;
FIG. 9 is a structural schematic diagram of one embodiment of a bean bin cover according to the present invention;
FIG. 10 is a structural schematic sectional view of one embodiment of a bean bin cover according to the present invention;
FIG. 11 is a structural schematic diagram of one embodiment of a bean bin cover bracket according to the present invention;
FIG. 12 is a structural schematic diagram of one embodiment of a bean bin cover bracket according to the present invention;
FIG. 13 is a structural schematic diagram of one embodiment of a bean bin cover bracket according to the present invention;
FIG. 14 is a schematic diagram of a mounting structure of one embodiment of a bean bin cover bracket according to the present invention;
FIG. 15 is a structural schematic diagram of a grinding disc bracket according to one embodiment of the present invention;
FIG. 16 is a schematic sectional view of a grinding disc bracket according to one embodiment of the present invention;
FIG. 17 is a structural schematic diagram of a grinding disc bracket according to one embodiment of the present invention;
FIG. 18 is a schematic diagram of a mounting structure of a grinding disc bracket according to one embodiment of the present invention;
FIG. 19 is a structural schematic diagram of a motor mounting rack according to one embodiment of the present invention;
FIG. 20 is a schematic sectional view of a motor mounting rack according to one embodiment of the present invention;
FIG. 21 is a schematic sectional view of a coffee grinder according to one embodiment of the present invention; and
FIG. 22 is a structural schematic diagram of a linkage assembly according to one embodiment of the present invention.

Reference numerals of the drawings:
1. main housing;
201. internal toothed ring; 202. external toothed ring; 2-1. adjusting knob; 2-2. external adjusting ring; 21. internal driving ring; 22. transmission gear; 23. adjusting scale; 24. rolling groove; 25. first bead assembly; 26. second bead assembly; 27. gear groove; 28. arc-shaped groove;
31. external grinding disc; 32. internal grinding disc; 33-1. driving sleeve rod; 33-2. lifting rod; 34. mounting bracket; 35. driving motor; 36. connecting shaft; 361. groove; 362. snap spring; 37. connecting base; 38. first bearing; 39. thrust spring;
4. grinding disc bracket; 41. external grinding disc mounting hole; 42. connecting shaft mounting hole; 421. bearing mounting position; 422. first bearing mounting position; 423. second bearing mounting position; 43. second bearing; 44. positioning ring; 45. upper mounting cylinder; 46. connecting rib; 47. lower mounting cylinder; 471. first protruded ring; 472. guide curved surface; 473. step; 474. mounting hole; 475. fastener mounting groove; 476. second protruded ring; 477. mounting fastening hole; 48. lower base; 481. powder outlet guide retaining ring; 482. mounting groove;
51. bean bin cover bracket; 511. window; 52. cover plate; 521. bean inlet through hole; 522. guide plate; 523. washer; 524. connecting portion; 525. connecting groove; 526. connecting sleeve; 53. bean feeding gap; 54. third bead assembly; 55. first positioning groove; 56. bean inlet opening; 57. arc-shaped cover body; 58. sliding groove; 59. second positioning groove;
6. motor mounting rack; 6-1. internal supporting ring; 6-2. external supporting ring; 6-3. first connecting portion; 6-4. second connecting portion; 6-5. positioning block; 6-6. mounting disc; 6-7. positioning groove; 6-8. central through hole; 6-9. peripheral through hole; 6-10. first inclined guide surface; 6-11. avoidance groove; 6-12. second inclined guide surface; 6-13. first through hole; 6-14. second through hole; 6-15. clamping block; 6-16. battery mounting groove; 6-17. control module mounting groove; 6-18. counterbore; 6-19. wire-passing groove; 6-20. protruded block; 6-21. large circular hole; 6-22. small circular hole; 6-23. first side connecting plate; 6-24. first upper connecting plate; 6-25. first lower connecting plate; 6-26. first bottom plate; 6-27. first reinforcing rib; 6-28. gear base; 6-29. gear shaft; 6-30. first guide cone body; 6-31. battery baffle; 6-32. charging module mounting column; 6-33. charging module baffle; 6-34. charging module positioning column; 6-35. second side connecting plate; 6-36. second upper connecting plate; 6-37. second lower connecting plate; 6-38. second bottom plate; 6-39. second reinforcing rib; 6-40. connecting column; 6-41. second guide cone body; 6-42. upper control module baffle; 6-43. middle control module baffle; 6-44. lower control module baffle; 6-45. control module longitudinal baffle; 6-46. upper control module mounting column; 6-47. lower control module mounting column; 6-48. battery assembly; 6-49. control module assembly; 6-50. extending sheet; 6-51. resilient abutting piece;
7. powder receiving box; 8. zero adjusting nut.

### DETAILED DESCRIPTION OF THE EMBODIMENTS

The present invention is further described in detail below with reference to the accompanying drawings and embodiments. The same components are represented by the same reference numerals.

The term "embodiment" herein refers to a particular feature, structure or characteristic that can be included in at least one embodiment of the present invention. The "in one embodiment" appearing in different parts of the present specification does not refer to the same embodiment, nor a separate or selective embodiment that is mutually exclusive with other embodiments.

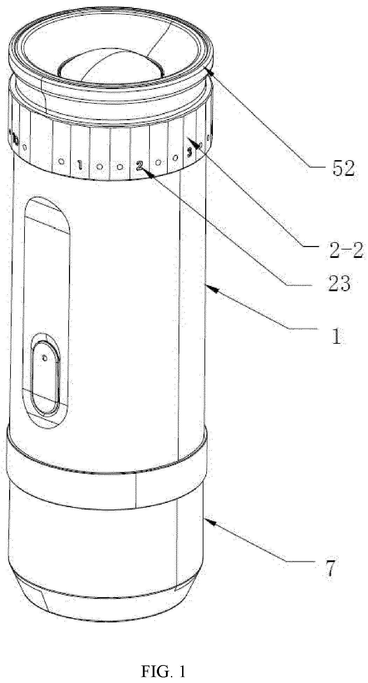

A coffee grinder shown in FIG. 1 to FIG. 3 is an electric coffee grinder, particularly an adjustable gear type electric coffee grinder. An overall housing includes a main housing 1 and a powder receiving box 7 arranged below the main housing 1; a grinding assembly is arranged in the main housing 1; the grinding assembly includes an external grinding disc 31 and an internal grinding disc 32; a mounting bracket 34, a grinding disc bracket 4, a driving motor 35 and a battery assembly 6-48 are arranged in the main housing 1; the battery assembly 6-48 is mounted on the mounting bracket 34; the driving motor 35 is fixedly connected to the mounting bracket 34, or the driving motor 35 is arranged in an axial sliding manner relative to the mounting bracket 34; the external grinding disc 31 as a fixed grinding disc is fixedly mounted on the grinding disc bracket 4; an output shaft of the driving motor 35 is connected to the internal grinding disc 32 through a connecting shaft 36 and drives the internal grinding disc 32 to rotate; and the internal grinding disc 32 as a movable grinding disc is in fit with the external grinding disc 12 to grind materials.

The main housing 1 is rotatably connected to an adjusting knob 2-1, a lifting rod 33-2 is arranged in the main housing 1, and one end of the lifting rod 33-2 is in fit with the adjusting knob 2-1 through a linkage assembly. The adjusting knob 2-1 drives the lifting rod 33-2 by the linkage assembly to move up and down. When the lifting rod 33-2 moves up and down, the lifting rod 33-2 drives the external grinding disc 31 or the internal grinding disc 32 to move up and down, and a gap between the external grinding disc 31 and the internal grinding disc 32 changes, so that the powder coarseness of the coffee grinder is changed.

The adjusting knob 2-1 is rotatably connected to the main housing 1, and the main housing 1 limits the adjusting knob 2-1 by a limiting piece from being removed. The limiting piece may be selected as the form that a clamping ring is fit with a clamping groove to limit the adjusting knob 2-1 from being removed, the clamping ring/clamping groove is arranged on the main housing 1 or an another mounting part fixed with the main housing 1, the another mounting part includes but is not limited to a mounting bracket 34, the corresponding adjusting knob 2-1 is provided with the clamping groove/clamping ring, and the clamping ring rotates in the clamping groove. The adjusting knob 2-1 is provided with an adjusting scale indication, and the adjusting scale indication is distributed circumferentially in 300°-360°. As a specific implementation, the adjusting scale indication is distributed on the adjusting knob 2-1 at 355°.

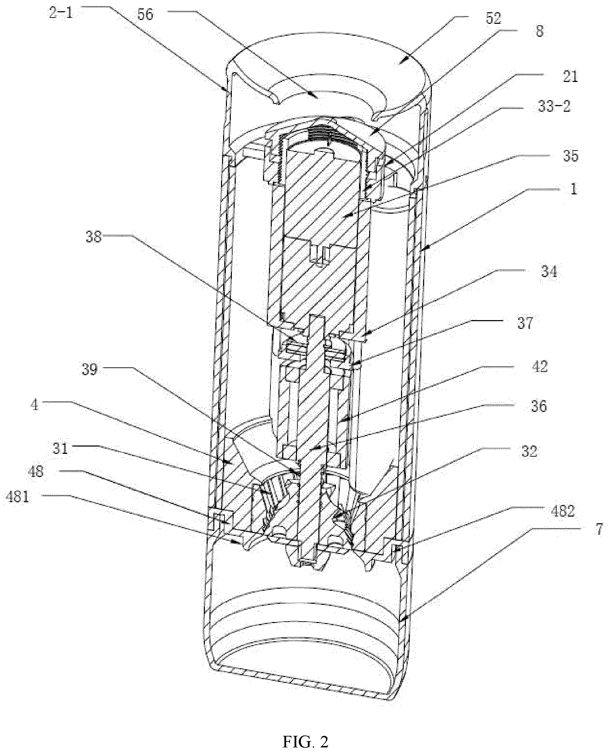

As shown in FIG. 2, in one specific embodiment of the linkage assembly, the linkage assembly is an internal driving ring 21, the adjusting knob 2-1 is fixedly connected to the internal driving ring 21 through a connecting rib, the internal driving ring 21 is in threaded connection with the lifting rod 33-2, the internal driving ring 21 is a driving nut, the lifting rod 33-2 is arranged in the main housing 1 in a rotation limiting manner and arranged in a sliding manner relative to an axial direction, when the adjusting knob 2-1 and the internal driving ring 21 are rotated, the lifting rod 33-2 is driven to move up and down so as to drive the internal grinding disc 32 or the external grinding disc 31 to ascend and descend to adjust the gap, and the lifting rod 33-2 may be set as a driving sleeve rod 33-1 arranged coaxially with the driving motor 35, or may be arranged eccentrically.

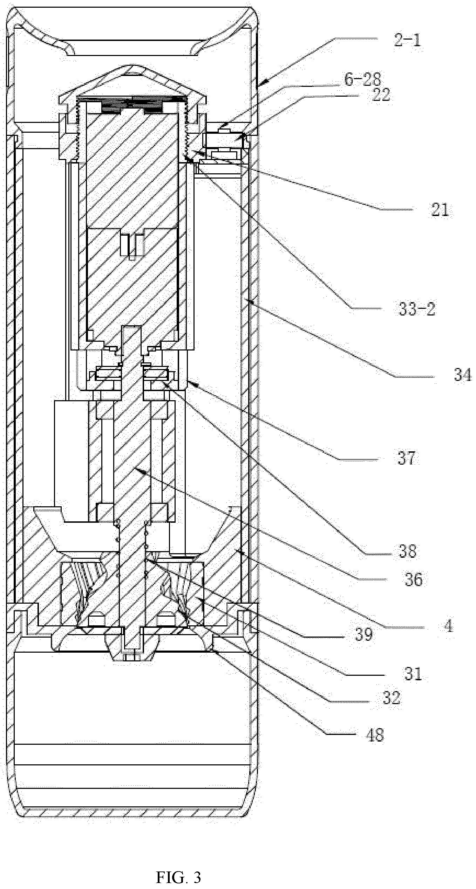

As shown in FIG. 3 to FIG. 5, in another specific embodiment of the linkage assembly, the linkage assembly includes an internal driving ring 21 and a transmission gear 22, the transmission gear 22 is a reduction gear, the transmission gear 22 and the internal driving ring 21 are rotatably arranged on the mounting bracket 34, the adjusting knob 2-1 is an external adjusting ring 2-2, the external adjusting ring 2-2 may be selected to be rotatably connected to the main housing 1 or the mounting bracket 34, preferably, rotatably connected to the mounting bracket 34, the external adjusting ring 2-2 is provided with an internal toothed ring, the internal driving ring 21 is provided with an external toothed ring, the reduction gear is rotatably arranged between the adjusting knob 2-1 and the internal driving ring 21 for mutual engagement, the mounting bracket 34 is provided with a gear base 6-28, the internal driving ring 21 abuts against the gear base 6-28, and the internal driving ring 21 is axially limited in the main housing 1. The internal driving ring 21 is in threaded fit with the lifting rod 33-2 to drive the grinding assembly to ascend and descend to adjust the gap, the lifting rod 33-2 is a driving sleeve rod 33-1, the driving sleeve rod 33-1 and the internal driving ring 21 are arranged coaxially, the driving sleeve rod 33-1 is arranged in the main housing 1 in a rotation limiting manner and arranged in a sliding manner relative to an axial direction, the internal driving ring 21 is a driving nut, and when the adjusting knob 2-1 and the internal driving ring 21 are rotated, the driving sleeve rod 33-1 is driven to move up and down.

The transmission gear 22 is provided, so that a pitch between the internal driving ring 21 and the lifting rod 33-2 is set smaller, and the adjusting process is smoother. Furthermore, the number of adjusting turns of the internal driving ring 21 is increased, the adjusting precision is significantly improved, and the problem in the prior art that the lifting piece is directly adjusted by the adjusting piece and the adjusting precision is not high due to the limitation of the rotation angle and the number of turns of the adjusting piece is solved. Moreover, the current coarseness gear can be read accurately and clearly through an adjusting scale 23 during use by a user, so the problem in the prior art that two technologies such as single-turn adjustment and multi-turn adjustment cannot consider both the adjusting accuracy and the clear adjusting gear indication is solved.

The reduction ratio of the external adjusting ring 2-2 to the internal driving ring 21 is less than or equal to 1:1.4 by setting the diameter ratio of the external adjusting ring 2-2 to the internal driving ring 21, and the number of turns of the internal driving ring 21 can be effectively increased, so that the adjusting precision can be improved.

Preferably, the reduction ratio of the external adjusting ring 2-2 to the internal driving ring 21 is less than or equal to 1:1.6 and greater than or equal to 1:3, so that the ratio of the external adjusting ring 2-2 to the internal driving ring 21 is suitable for a small portable coffee grinder, and the minimum adjusting unit of the adjusting scale 23 is within the controllable range of fine hand operation.

The external adjusting ring 2-2, the internal driving ring 21, the transmission gear 22 and the driving sleeve rod 33-1 form a coarseness adjusting structure. When the coarseness adjusting structure is arranged at a lower end of the main housing 1, an output end of the driving sleeve rod 33-1 drives the external grinding disc 31 to move to adjust the gap. When the coarseness adjusting structure is arranged at an upper end of the main housing 1, the output end of the driving sleeve rod 33-1 drives the internal grinding disc 32 to move to adjust the gap.

In one specific embodiment in which the lifting rod 33-2 drives the internal grinding disc 32 to move, the lifting rod 33-2 is a driving sleeve rod 33-1 and can be selected to drive the driving motor 35 to move axially so as to drive the internal grinding disc 32 to rotate. Specifically, the driving sleeve rod 33-1 and the mounting bracket 34 are arranged in a sliding manner, a driving motor mounting cavity is arranged in the driving sleeve rod 33-1, the driving motor 10 is fixed in the driving motor mounting cavity of the driving sleeve rod 33-1, the connecting shaft 36 is fixedly connected to an output end of the driving motor 10, and the other end of the connecting shaft 36 is connected to the internal grinding disc 32.

The working principle is: the adjusting knob 2-1 is rotated, and the internal driving ring 21 is driven by the transmission gear 22 or through connection to rotate, so that the driving sleeve rod 33-1 is driven through a threaded fit to ascend and descend, the driving sleeve rod 33-1 drives the motor, the connecting shaft 36 and the internal grinding disc 32 fixed on the connecting shaft 36 to ascend and descend, the overall structure is simple, and the fitting precision of each part inside is high.

As shown in FIG. 2 to FIG. 5, in another specific embodiment in which the lifting rod 33-2 drives the internal grinding disc 32 to move, the lifting rod 33-2 is a driving sleeve rod 33-1, the driving sleeve rod 33-1 can be selected to directly drive the connecting shaft 36 of the internal grinding disc 32 to move. Specifically, the mounting bracket 34 fixedly mounts the driving motor 35, the output end of the driving motor 35 is connected to the connecting shaft 36, the connecting shaft 36 and the output end of the driving motor 35 are arranged in an axial sliding manner, the connecting shaft 36 may be set as a polygonal prism to be inserted into an output shaft interface of the driving motor 35 to limit the rotation of the driving motor, the driving motor 35 drives the connecting shaft 36 to rotate, the internal driving ring 21 is in threaded connection with the driving sleeve rod 33-1, the driving sleeve rod 33-1 and the mounting bracket 34 are arranged in a sliding manner, the driving sleeve rod 33-1 is provided with an axially formed penetrating hole, the driving sleeve rod 33-1 is coaxially sleeve outside the driving motor 35, the driving rod 33-1 is provided with an avoidance groove for the mounting bracket 34 to pass though, the rotation of the driving sleeve rod 33-1 can be limited through the avoidance groove, or a sliding block and a sliding groove may be additionally arranged on the driving sleeve rod 33-1 and the main housing 1 to limit the rotation of the driving sleeve rod 33-1. The mounting bracket 34 is provided with a mounting disc 6-6 for mounting the driving motor 35 in the motor mounting cavity, and a through groove for the driving sleeve rod 33-1 to pass through in a sliding manner is formed in the mounting disc 6-6, thereby further limiting the rotation of the driving sleeve rod 33-1.

The working principle is: the external adjusting ring 2-2 is rotated, and the internal driving ring 21 is driven by the transmission gear 22 to rotate, so that the driving sleeve rod 33-1 is driven through a threaded fit to ascend and descend, and the driving sleeve rod 33-1 drives the connecting shaft 36 and the internal disc 32 fixed on the connecting shaft 36 to ascend and descend. The internal grinding disc 32 is directly driven to ascend and descend, so that the defect that the stability of the bean powder coarseness is influenced by fatigue and gradual position deviation of the adjusting structure due to that the adjusting structure drives the motor to move together is overcome.

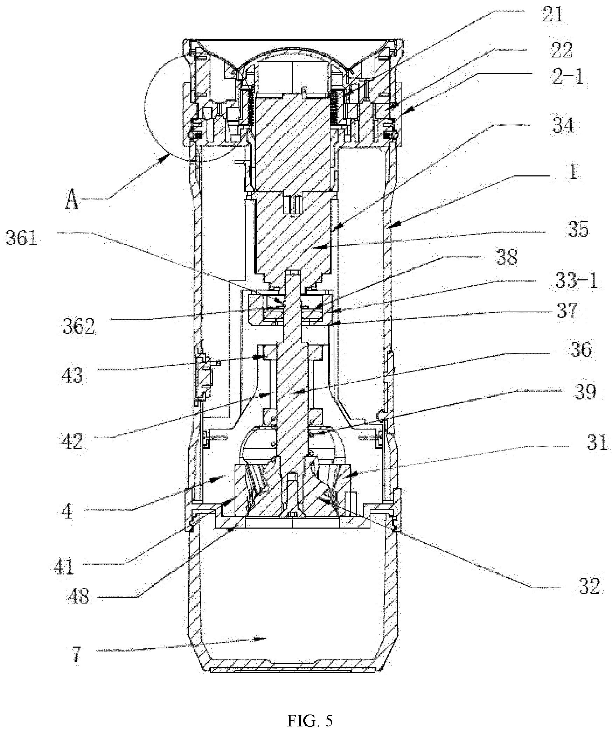

As shown in FIG. 5, one end of the driving sleeve rod 33-1 is axially and fixedly connected to the connecting shaft 36. The axial fixed connection manner is specifically selected as that the connecting shaft 36 abuts against the driving sleeve rod 33-1 axially, the driving sleeve rod 33-1 includes a connecting base 37, the connecting base 37 is connected to the connecting shaft 36, a first bearing 38 is arranged on the connecting base 37, the connecting shaft 36 is rotatably sleeved in the first bearing 38, the connecting shaft 36 is connected to the first bearing 38 in an up-and-down movable manner, a groove 361 is formed in an outer wall of the connecting shaft 36, a snap spring 362 is clamped in the groove 361, the snap spring 362is configured to abut against an upper end face of the first bearing 38 of the driving sleeve rod 36, the connecting shaft 36 is sleeved with a thrust spring 39, one end of the thrust spring 39 abuts against the internal grinding disc 32,the other end of the thrust spring 39 and the lower end of the grinding disc bracket abut against each other, preferably, a washer is arranged at the lower end of the grinding disc bracket 4, the thrust spring 39 and the washer abut against each other, the thrust spring 39 provides a downward thrust for the connecting shaft 36, and the connecting shaft 36 is limited from moving axially on the connecting base 37 of the driving sleeve rod 33-1 under the limitation of the snap spring 362 at the upper end, so the connecting shaft 36 is limited from moving axially relative to the driving sleeve rod 33-1 under the bidirectional limitation of the thrust spring 39 at the lower end and the snap spring 362 at the upper end.

The thrust spring 39 is initially in a compressed state. when the driving sleeve rod 33-1 ascends, the snap spring 362 abuts against the upper end face of the driving sleeve rod 33-1, the connecting shaft 36 is limited from moving downward relative to the driving sleeve rod 33-1, the internal grinding disc 32 ascends along with the connecting shaft 36 at the same time, the compression amount of the thrust spring 39 is increased, the gap between the internal grinding disc 32 and the external grinding disc 31 is reduced, and the thrust of the thrust spring 39 is balanced with the force of the snap spring 362 abutting against the first bearing 38.

When the driving sleeve rod 33-1 moves downward, the compression amount of the thrust spring 39 is released, the internal grinding disc 32 is pushed to move away from the driving sleeve rod 33-1, and the snap spring 362 drives the connecting shaft 36 to move downward along with the driving sleeve rod 33-1 under the pull force of the thrust spring 39, thereby keep the snap spring 362 to continuously abut against the first bearing 38 and keeping the thrust of the thrust spring 39 to be balanced with the force of the snap spring 362 abutting against the driving sleeve rod 33-1.

As shown in FIG. 2, according to the mounting manner of the axial fixed connection of the connecting shaft 36 and the driving sleeve rod 33-1, or the connecting shaft may be fixed on the connecting base 37 of the driving sleeve rod 33-1 through the first bearing 38, the connecting shaft 36 is rotatably connected to the first bearing 38, a thrust spring 39 is mounted between the internal grinding disc 32 and the connecting shaft 36, a flange is arranged at a lower section of the connecting shaft 36, an upper end face of the flange, the upper end face of the internal grinding disc 32 and the thrust spring 39 abut against each other, and the internal grinding disc 32 and the connecting shaft 36 have a small movement range in the axial direction. The thrust spring 39 is arranged between the connecting shaft 36 and the internal grinding disc 32, so that a strong and direct thrust can be provided. Due to no relative rotation between the connecting shaft 36 and the internal grinding disc 32, the friction loss of the thrust spring 39 due to rotation can be avoided.

The specific mounting manner of the adjusting knob 2-1 is: a bean inlet opening 56 is formed above the main housing 1. In the embodiment in which the adjusting knob 2-1 is arranged at the upper end of the main housing 1, the bean inlet opening 56 may be formed at the upper end of the adjusting knob 2-1, or a bean bin cover plate 52 may be arranged on the main housing 1 and the bean bin cover plate 52 is provided with the bean inlet opening 56, or the adjusting knob 2-1 may be detachably connected and beans are added after the adjusting knob 2-1 is removed, or an opening is formed in a side surface of the main housing 1.

As shown in FIG. 2, in one embodiment, a funnel portion and a rotating portion of the adjusting knob 2-1 are integrally formed and fixed. The bean inlet opening 56 is formed at the center of the adjusting knob 2-1, and an upper top surface of the adjusting knob 2-1 is bent and inclined downward towards the center to form the funnel portion, thereby better guiding the beans to fall.

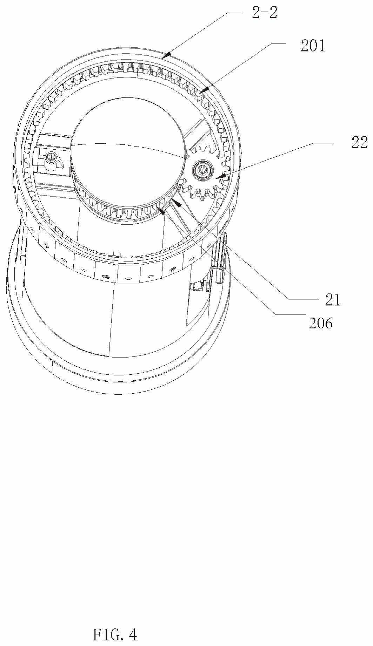

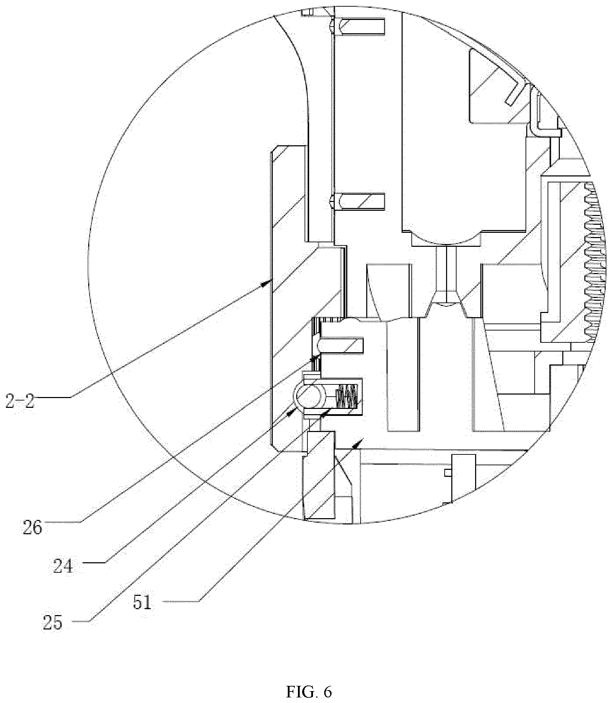

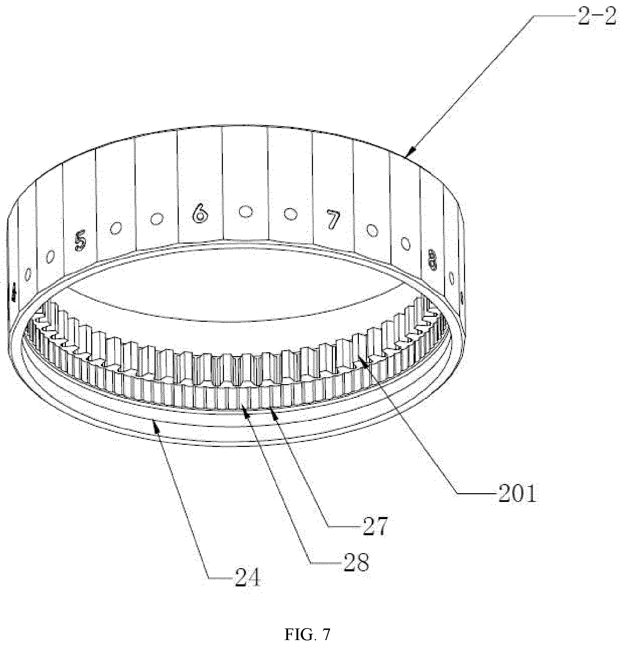

As shown in FIG. 4 to FIG. 7, the funnel portion and the rotating portion of the adjusting knob 2-1 may be arranged separately; the adjusting knob 2-1 is an external adjusting ring 2-2; the external adjusting ring 2-2 is provided with a rolling groove 24; a first bean assembly 25 in rolling fit with the rolling groove 24 is arranged on the mounting bracket 34, so that the external adjusting ring 2-2 can rotate more stably and smoothly; a second bead assembly 26 in fit with an internal toothed ring or a gear groove 27 of the external adjusting ring 2-2 is further arranged on the mounting bracket 34; the gear groove 27 includes several arc-shaped grooves 28 arranged circumferentially; and the second bead assembly 26 bounces between the internal tooth or the arc-shaped groove 28 when the external adjusting ring 2-2 rotates, thereby providing a sliding resistance for the external adjusting ring 2-2, and playing a role in locking and positioning the external adjusting ring 2-2. The specific structure of the arc-shaped groove 28 of the external adjusting ring 2-2 is shown in FIG. 7.

The bead assembly in the present invention may be a conventional bead in the prior art. Preferably, the bead assembly includes a sleeve, a spring piece and a steel bead, where the steel bead is limited in the sleeve, the spring abuts against a bottom surface of the sleeve and the steel bead, the spring piece provides a resilient supporting force away from one side of the bottom surface of the sleeve for the steel bead, and the steel bead bounds under the action of an external force.

The funnel portion or the adjusting knob 2-1 extends downward at the position of the bean inlet opening 56 to form a first retaining ring, so that beans can be prevented from bouncing out to a certain extent. An inner wall of the main housing 1 and outer walls of the driving motor 35 and the battery assembly 6-48 form a bean inlet channel for beans to pass through. The bean inlet opening 56 and the bean inlet channel communicate with each other to form a bean storage space with a large volume.

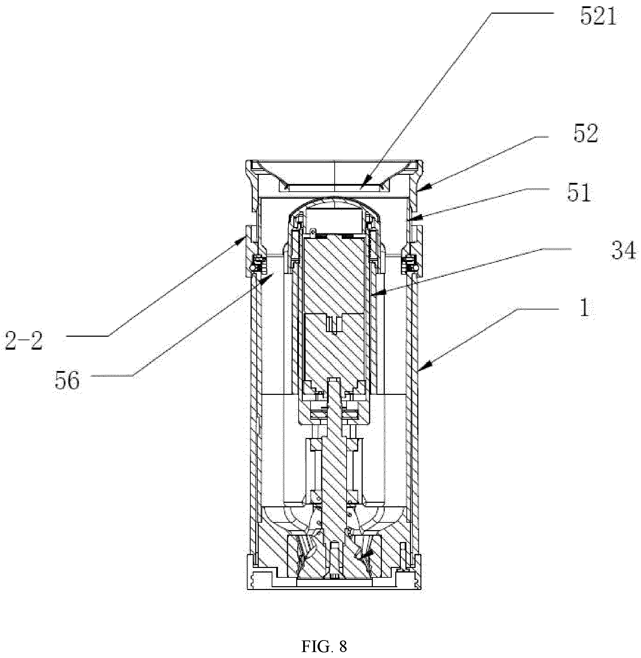

As shown in FIG. 8 to FIG. 14, in one embodiment in which an opening is formed in the bean bin cover, a bean bin cover bracket 51 is arranged above the main housing 1; the bean bin cover bracket 51 may be integrally formed with a mounting bracket 34, or may be detachably and fixedly connected through a fastener; a through bean inlet channel is formed in the bean bin cover bracket 51; a cover plate 52 is arranged on the bean bin cover bracket 51 in a liftable adjustment manner; a bean inlet through hole 521 is formed in the cover plate 52; when the cover plate 52 ascends to a first height position away from the bean bin cover bracket 51, a bean feeding gap 53 communicating with the bean inlet channel is formed between the bean inlet through hole 521 of the cover plate 52 and the bean bin cover bracket 51; when the cover plate 52 descends to a second height position close to the bean bin cover bracket 51, the bean inlet through hole 521 of the cover plate 52 abuts against the bean bin cover bracket 51 to close the bean inlet channel; the connection manner between the cover plate 52 and the bean bin cover bracket 51 may be selected as a sliding connection or threaded connection; and the height position of the cover plate 52 is adjusted through a direct push manner or a spiral manner.

Taking the sliding connection as an example, a sliding groove 58 is formed in the bean bin cover bracket 51; a sliding block in fit with the sliding groove 58 is arranged on the cover plate 52; and preferably, at least two sliding grooves 58 are provided and are symmetrically formed in the bean bin cover bracket 51.

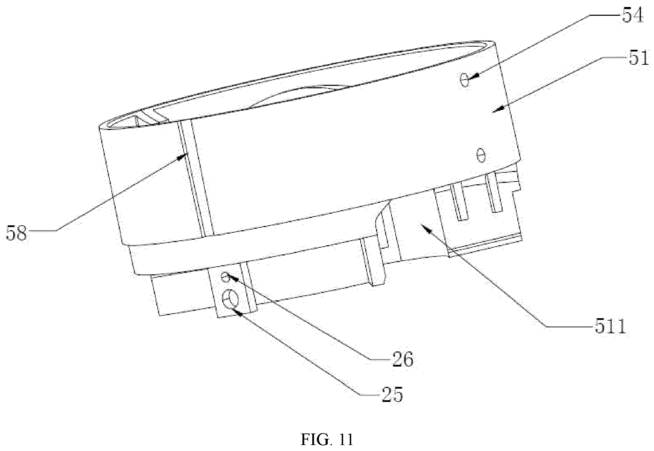

One embodiment of the sliding groove 58 is shown in FIG. 11, the sliding groove 58 extends linearly in the axial direction of the bean bin cover bracket 51, positioning at the first height position and the second height position can be implemented by a resilient clamping piece, and the resilient clamping piece may be selected as a bead assembly, preferably, arranged on the bean bin cover bracket 51.

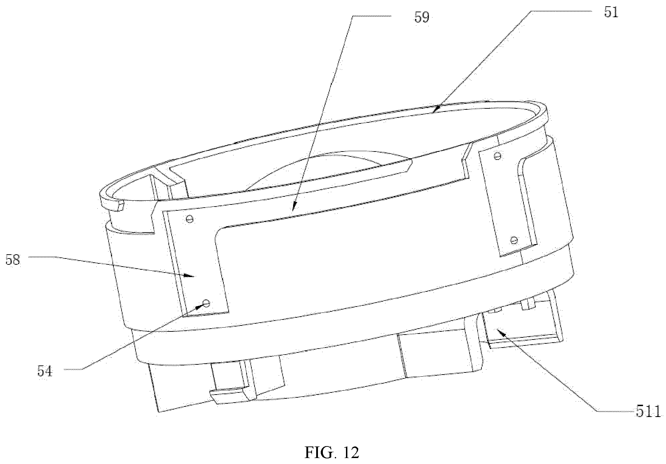

Another embodiment of the sliding groove 58 is shown in FIG. 12, the sliding groove 58 extends linearly in the axial direction of the bean bin cover bracket 51, the sliding groove 58 close to the first height end laterally extends to form a second positioning groove 59, and when the cover plate 52 is pulled upward to arrive at the first height position, the sliding block on the cover plate 52 is circumferentially rotated to be positioned in the second positioning groove 59.

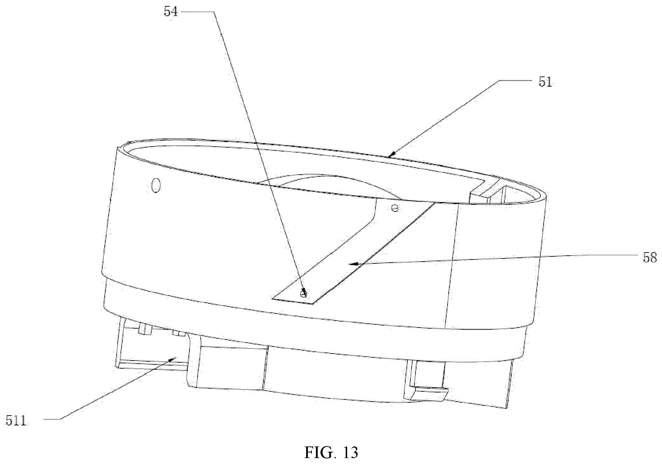

Another embodiment of the sliding groove 58 is shown in FIG. 13, the sliding groove 58 may further be set as an inclined groove spirally extending along the outer peripheral surface of the bean bin cover bracket 51, preferably, the sliding groove 58 close to the first height end may laterally extend to form a second positioning groove 59, and when the cover plate 52 is rotated along the inclined groove to arrive at the first height, the sliding block on the cover plate 52 is circumferentially rotated to be positioned in the second positioning groove 19.

The cover plate 52 opens and closes the bean inlet channel in a lifting manner, a user can operate conveniently whether in a push-pull or spiral form, and the cover plate 52 and the bean bin cover bracket 51 cannot be disassembled, thereby preventing the cover plate 52 from being lost during use.

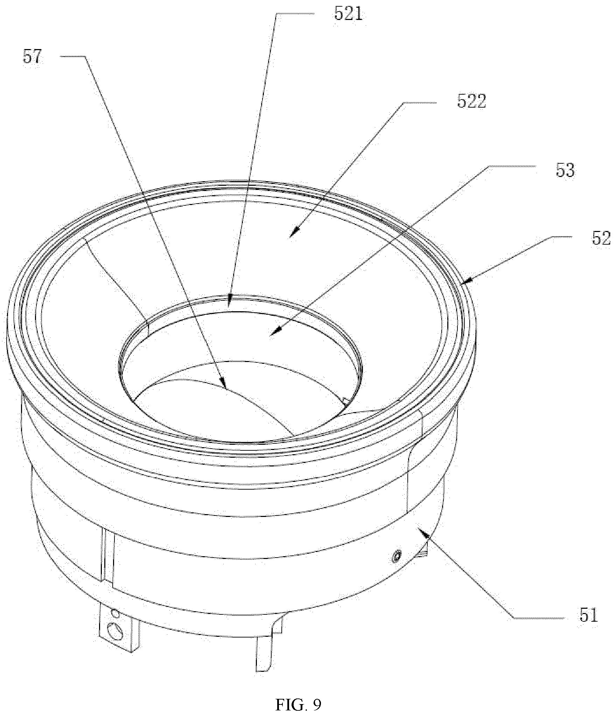

As shown in FIG. 9, an upper end face of the cover plate 52 is a guide plate 522, the guide plate 522 forms an arc-shaped guide surface sinking radially from the outside to the bean inlet through hole 521, and the guide plate 522 completely covers the bean inlet channel 2 in the bean bin cover bracket 51 when the cover plate 52 descends to the second height, so that the cover plate 52 functions as both a bean bin cover and a bean falling guide plate 522, multiple functions are integrated, and the structure of the coffee is simplified.

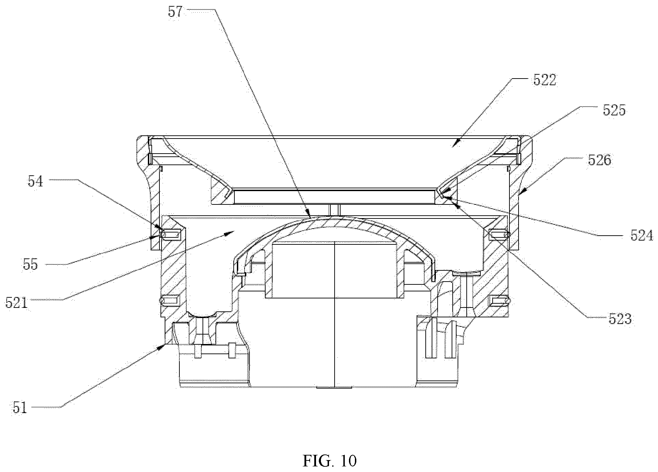

As shown in FIG. 10, a third bean assembly 54 is arranged on the bean bin cover bracket 51, and a first positioning groove 55 matched with the third bead assembly 54 is formed in the cover plate 52, or a bead assembly 54 is arranged on the cover plate 52, and a first positioning groove 55 matched with the third bead assembly 54 is formed in the bean bin cover bracket 51. The third bead assembly 54 includes a resilient piece and a ball. The ball of the third bead assembly 54 is clamped in the first positioning groove 55, thereby locking two states, such as the first height position and the second height position, of the cover plate 52, and playing a role in promoting that the state of the cover plate 52 is switched in place. Two third bead assemblies 51 or/and first positioning grooves 55 are provided, and are respectively arranged at the first height position and the second height position correspondingly. Preferably, two third bead assemblies 54 and two first positioning grooves 55 are provided, so that the locking state of the cover plate 52 is more stable.

As shown in FIG. 10, the cover plate 52 includes a guide plate 522 and a connecting sleeve 526 on an upper end face; the guide plate 522 is provided with a washer 523 at the lower end of the bean inlet through hole 521; the washer 523 may be made of a deformable resilient material, such as rubber, silica gel, a foaming material and other high-resilience polymer materials; the washer 523 serves as an abutting portion for directly abutting against the bean bin cover bracket 51; the deformable resilient material can play a role in anti-collision protection, so that the deformation of the cover plate 52 after overload adjustment can be avoided; and on the other hand, the washer 523 reduces the gap between the cover plate 52 and the bean bin cover bracket 51 after closed contact to play a sealing role, thereby preventing foreign matters or dust from entering.

The guide plate 522 is bent and extends inward at the position of the bean inlet through hole 521 to be provided with a connecting portion 524, the washer 523 is provided with a connecting groove 525 in fit with the connecting portion 524, the washer 523 is connected to the connecting portion 524 through the connecting groove 525, and the connection relationship between the washer 523 and the connecting portion 524 may select adhesion or clamping connection or interference fit. Since the internal ring surface and the lower end face of the washer 523 serve as stress abutting surfaces, the connecting portion 524 is set to be bent inward, the stress between the connecting groove 525 of the washer 523 and the connecting portion 524 can be decomposed, and the position where the washer 523 is connected to the guide plate 522 is reduced from being deformed by the stress and removed.

The bean bin cover bracket 51 has a cylindrical structure surrounded by an internal ring and an external ring, the bean inlet channel is formed between the internal ring and the external ring, the connecting sleeve 526 is in sliding connection or threaded connection with the external ring, an arc-shaped cover body 57 is arranged on the internal ring, the arc-shaped cover body 57 and the guide plate 522 jointly form a bean falling guide portion, and preferably, the guide plate 522 and the arc-shaped cover body 57 are selected as metal plates, so that the outer surface of the coffee grinder can be cleaned conveniently.

The mounting bracket 34 includes a motor mounting rack 6, the motor mounting rack 6 is provided with a motor mounting cavity at the axial position, the bean bin cover bracket 51 is fixedly connected to the motor mounting rack 6, the cover plate 52 further includes the connecting sleeve 526 in sleeving connection with the external ring, the connecting sleeve 526 is in lifting connection with the external ring, the internal ring forms the arc-shaped cover body 57 covering the motor mounting cavity of the coffee grinder, and the bean inlet through hole 521 of the cover plate 52 abuts against the arc-shaped cover body 57 to close the bean inlet channel 2.

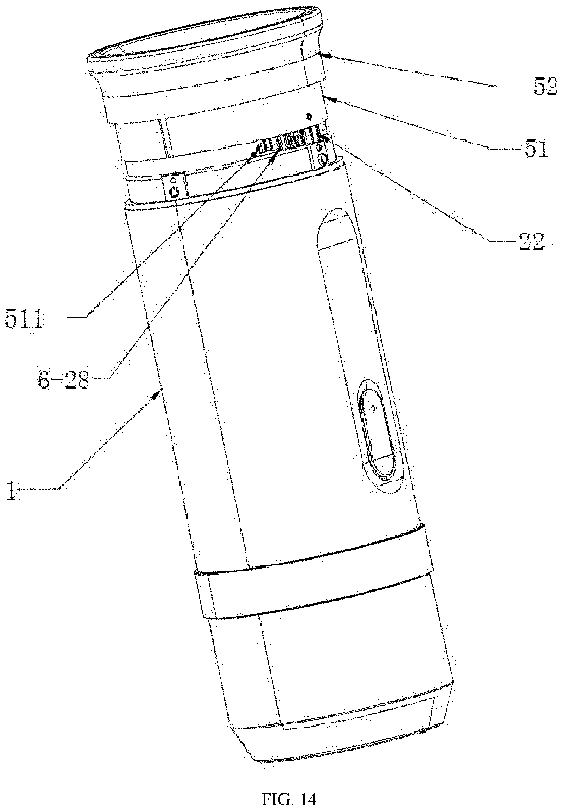

As shown in FIG. 14, in the embodiment in which the adjusting knob 2-1 is arranged at the upper end of the main housing 1 and is mutually sleeved with the bean bin cover bracket 51, the bean bin cover bracket 51 is provided with a window 511, and the window 511 accommodates a linkage structure in which the adjusting knob 2-1 is in fit with the internal driving ring 21. Preferably, the gear base 6-28 is arranged on the bean bin cover bracket 51, the transmission gear 22 is rotatably arranged on the gear base 6-28, the bean bin cover bracket 51 is provided with the window 511 at the position close to the gear base 6-28, and the transmission gear 22 partially extends out of the window 511 to be mutually engaged with the internal toothed ring 201 of the external adjusting ring 2-2.

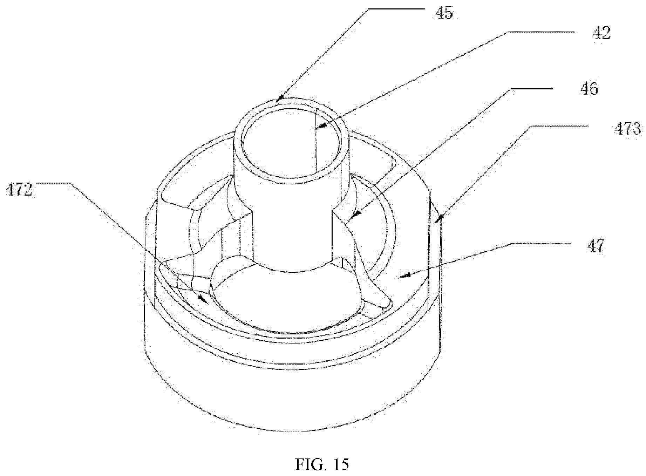

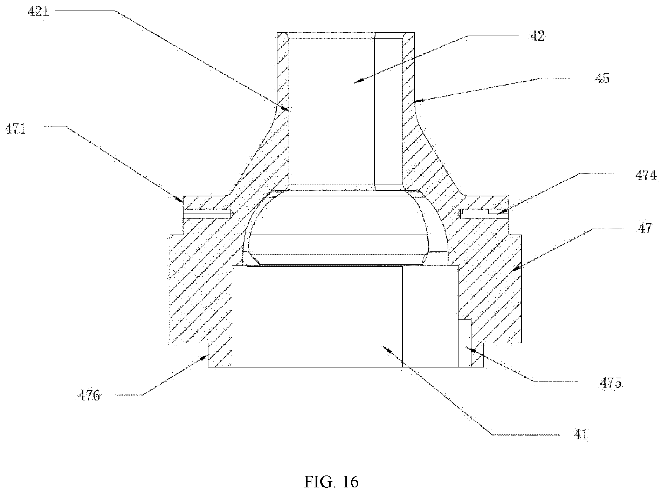

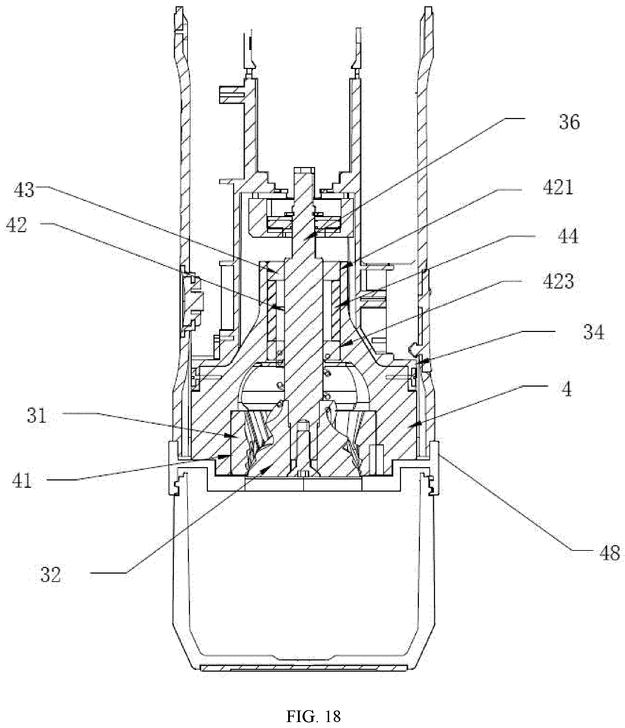

As shown in FIG. 15 to FIG. 18, the specific embodiment of the integrally formed grinding disc bracket 4 is: the grinding disc bracket 4 includes an external grinding disc mounting hole 41 and a connecting shaft mounting hole 42; the connecting shaft mounting hole 42 at least includes a bearing mounting position 421, preferably, two; two coaxially arranged second gearings 43 are arranged in the connecting shaft mounting hole 42; and the connecting shaft 36 penetrate through the second bearings 43. The material may be selected as a metal or alloy material, the alloy material includes aluminum alloy, and a preparation process for the grinding disc bracket 4 may select casting and integral formation or milling and forming a block material, so the concentricity of the external grinding disc mounting hole 41 and the connecting shaft mounting hole 42 is greatly improved.

A hole wall of the bearing mounting position 421 and a hole wall of the connecting shaft mounting hole 42 are arranged in a continuous straight line, and the second bearings 43 are in interference fit with the bearing mounting position 421. When two bearing mounting positions 421 are provided, the bearing mounting positions 421 include a first bearing mounting position 422 and a second bearing mounting position 423, a positioning ring 44 is arranged between two bearings 43, and the positioning ring 44 respectively abuts against the second bearings 43 arranged on two sides to limit the upper second bearing 43 from moving down and limit the lower second bearing 43 from moving up. Preferably, limiting pieces for limiting the two second bearings 43 from being removed are respectively arranged at the upper end and lower end of the connecting shaft mounting hole 42, and the limiting pieces may be selected as limiting gaskets or limiting pins, the limiting pieces known in the prior art.

When the grinding disc bracket 4 is selected for punching and forming the block material, the alloy raw material is clamped by a clamp, an external grinding disc mounting hole 41 is drilled at one side of the alloy block through a punching and milling device, and the punching and milling device further drills a connecting shaft mounting hole 42 at the same side. The hole diameter of the connecting shaft mounting hole 42 is less than the external grinding disc mounting hole 41, a side wall of the connecting shaft mounting hole 42 is set as a straight line, and the traditional stepped bearing mounting hole is abandoned, so that the connecting shaft mounting hole 42 and the external grinding disc mounting hole 41 can be punched and milled by the positioned and mounted punching and milling device, and the concentricity error in the mounting process of a plurality of punching and milling devices in the prior art is avoided.

After the connecting shaft mounting hole 42 and the external grinding disc mounting hole 41 are punched and milled, the periphery of the semi-finished product is ground and drilled, so that a main bracket includes a lower mounting cylinder 47 and an upper mounting cylinder 45 in appearance, the external grinding disc mounting hole 41 is formed in the lower mounting cylinder 47, the connecting shaft mounting hole 42 is formed in the upper mounting cylinder 45, the upper mounting cylinder 45 and the lower mounting cylinder 47 are connected through connecting ribs 46, a bean inlet channel communicating with the lower mounting cylinder 47 is formed among several connecting ribs 46, an upper end face of the lower mounting cylinder 47 extends to form first protruded ring 471, and an upper end face of the first protruded ring 471 forms a smooth and downward inclined guide curved surface 472 at the bean inlet channel, so that the beans in a bean storage cavity can be guided to enter a grinding cavity more smoothly and uniformly.
i. A step 473 is formed at the position where the first protruded ring 471 is connected to the lower mounting cylinder 47, a straight line section is arranged on an external ring surface of the first protruded ring 471, the straight line section is configured to be in fit with a housing of the coffee grinder to form an anti-rotation structure, a mounting hole 474 is formed in the straight line section, the first protruded ring 471 of a bean-grinding bracket is configured to be in sleeved fit with the mounting bracket 34, and the mounting bracket 34 is connected to the mounting hole 474 through a fastener to be fixedly connected to the grinding disc bracket 4, so that the concentricity of the mounting bracket 34 for mounting a coarseness adjusting assembly and the grinding disc bracket 4 is higher, and the adjusting precision of the coarseness adjusting assembly is improved.

The external grinding disc 31 is in interference fit with the external grinding disc mounting hole 41, a fastener mounting groove 475 penetrating through the lower end face of the mounting bracket is formed in the hole wall of the external grinding disc mounting hole 41, and the fastener is mounted in the fastener mounting groove 17 to lock the external grinding disc 31 after the external grinding disc 31 is mounted in the external grinding disc mounting hole 41, so that the external grinding disc 31 can be prevented from being rotated and removed, and the fastener may be selected as a screw or pin.

As a preferred embodiment, a part below the lower mounting cylinder 47 extends to form a second protruded ring 476, the external grinding disc mounting hole 41 is surrounded by a hole wall of the second protruded ring 476, a step 473 is formed at the position where the second protruded ring 476 is connected to the lower mounting cylinder 47, the lower mounting cylinder 47 is provided with a mounting fastening hole 477 at the step 473, and during assembling of the grinding disc bracket 4, a lower base 48 is mounted below the lower mounting cylinder 47, the lower base 48 forms a baffle, a connecting portion of the baffle is connected to the mounting fastening hole 477 and extends radially towards the side of the external grinding disc mounting hole 41 to form a retaining ring for receiving the external grinding disc 31. The retaining ring plays a role in receiving the external grinding disc 31, the retaining ring surrounding a powder outlet is formed, and the retaining ring can effectively prevent powder from flying.

An accommodating groove for limiting the external grinding disc 31 up and down is formed between the external grinding disc mounting hole 41 of the grinding disc bracket 4 and the lower base 48, the grinding disc bracket 4 is provided with a guide conical surface with a closed lower end above the accommodating groove, the lower base 48 is fixed on the main housing 1, the lower base 48 is provided with a powder outlet guide retaining ring 481, an inner side surface of the powder outlet guide retaining ring 481 is an arc surface radially enlarged from top to bottom, a mounting groove 22 for being connected to a powder receiving box 7 is formed in the lower end face of the lower base 48, the position of the mounting groove 22 is higher than the powder outlet guide retaining ring 481, and the powder outlet guide retaining ring 481 guides powder output, so that the flying powder in the power falling process can be reduced, the ground powder can be effectively prevented from flying to the position where the powder receiving box 7 is connected to the lower base 48, and the residual powder amount is reduced.

The connection manner between the powder receiving box 7 and the lower base 48 may be threaded connection, hermetic connection or clamping connection.

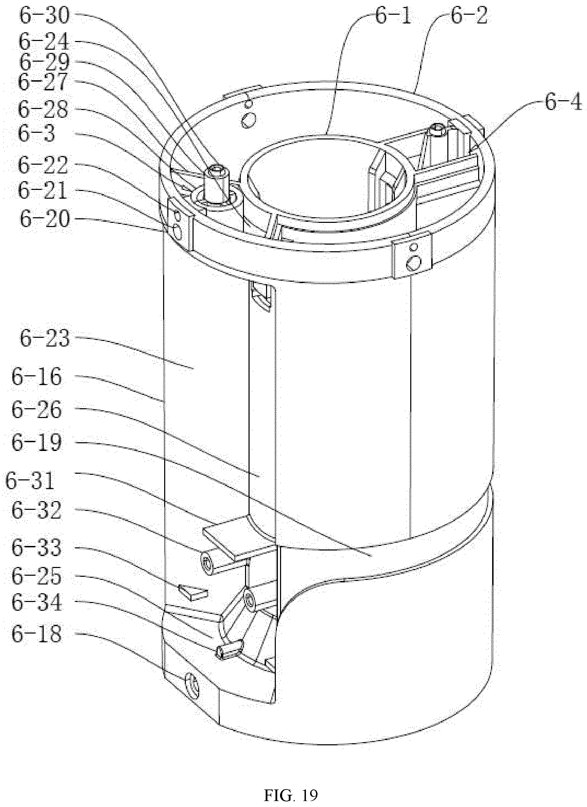

As shown in FIG. 19 to FIG. 22, the mounting bracket 34 includes a motor mounting rack 6. One embodiment of the motor mounting rack 6 is: the motor mounting rack 6 includes an internal supporting ring 6-1, an external supporting ring 6-2 located outside the internal supporting ring 6-1, and a first connecting portion 6-3 and a second connecting portion 6-4 which are respectively located on two sides of the internal supporting ring 6-1 and configured to connect the internal supporting ring 6-1 and the external supporting ring 6-2, the internal supporting ring 6-1, the external supporting ring 6-2, the first connecting portion 6-3 and the second connecting portion 6-4 are all integrally injection molded, and a blanking channel is formed in an area between the internal supporting ring 6-1 and the external supporting ring 6-2 where the first connecting portion 6-3 and the second connecting portion 6-4 are not arranged.

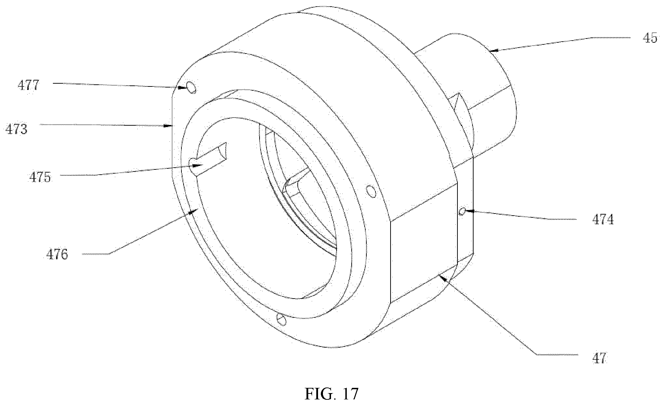

As shown in FIG. 17, positioning blocks 6-5 are convexly formed on the side wall of the internal supporting ring 6-1 close to the first connecting portion 6-3 and the second connecting portion 6-4, the positioning blocks 6-5 extend from top to bottom, and a mounting disc 6-6 for connecting the positioning blocks are integrally formed between the two positioning blocks 6-5. The mounting disc 6-6 is circular, the diameter of the mounting disc 6-6 is less than the inner diameter of the internal supporting ring 6-1, a square positioning groove 6-7 is formed at an upper side of the mounting disc 6-6, the center of the positioning groove 6-7 is over against the circle center of the mounting disc 6-6, and four corners of the positioning groove 6-7 all exceed the mounting disc 6-6 to form an edge-breaking structure. Two opposite sides of the positioning groove 6-7 are over against the first connecting portion 6-3 and the second connecting portion 6-4. A central through hole 6-8 penetrating through the mounting disc 6-6 and four peripheral through holes 6-9 distributed along the periphery of the central through hole 6-8 are formed at the bottom of the positioning groove 6-7.

As shown in FIG. 17, the inner surface of the positioning block 6-5 is a concave arc-shaped surface, the arc-shaped surface is coaxial with the internal supporting ring 6-1, and the inner diameter size is equal to or slightly greater than the outer diameter size of the driving motor 35. A first inclined guide surface 6-10 is formed at the top of the positioning block 6-5, and the first inclined guide surface 6-10 inclines towards the center of the internal supporting ring 6-1 from top to bottom and is configured to guide the driving motor 35 to enter the internal supporting ring 6-1 conveniently. An avoidance groove 6-11 is formed in an inner side wall of the positioning block 6-5 close to the upper end, and a second inclined guide surface 6-12 inclining towards the center of the internal supporting ring 6-1 from top to bottom is formed on an inner side wall of the avoidance groove 6-11 close to the upper end. A square first through hole 6-13 is formed in the inner side wall of the avoidance groove 6-11 and located below the second inclined guide surface 6-12, a second through hole 6-14 is formed in the inner side wall of the avoidance groove 6-11 and located below the first through hole 6-13, and the second through hole 6-14 includes two longitudinal holes close to two side walls of the avoidance groove 6-11 and a transverse hole located at lower ends of the longitudinal holes and connected to the two longitudinal holes. The inner side wall of the internal supporting ring 6-1 is cut by the second through hole 6-14 to form a clamping block 6-15 with a deformable and movable lower end, and an inner side wall of the lower end of the clamping block 6-15 inclines towards the center of the internal supporting ring 6-1 from top to bottom. The position of a lower edge of a first through hole 6-13 in the positioning block 6-5 adjacent to the first connecting portion 6-3 is lower than the position of an upper edge of the second through hole 6-14, and the position of the lower edge of the first through hole 6-13 in the positioning block 6-5 adjacent to the second connecting portion 6-4 is higher than the position of the upper edge of the second through hole 6-14.

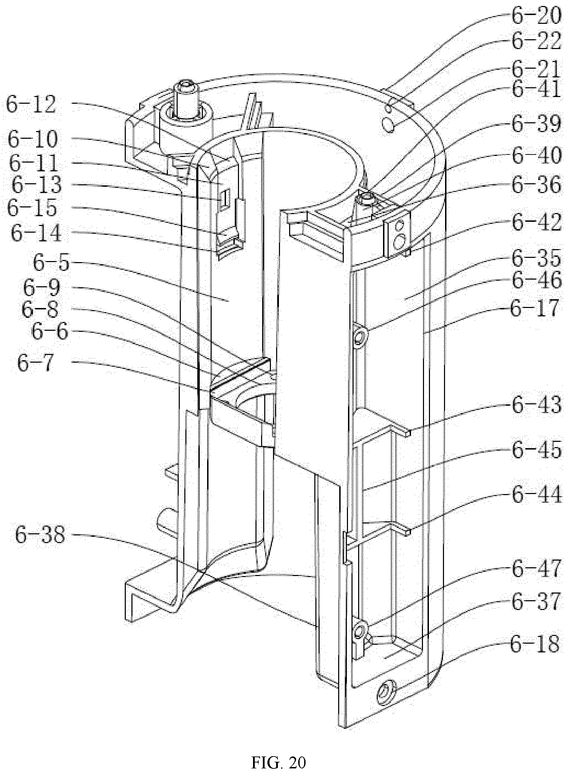

As shown in FIG. 19 and FIG. 20, the external supporting ring 6-2 is provided with an opening at the first connecting portion 6-3 to serve as a battery mounting groove 6-16, and is provided with an opening at the second connecting portion 6-4 to serve as a control module mounting groove 6-17; and counterbores 6-18 for passing through bolts are formed in the side surface of the external supporting ring 6-2 located below the battery mounting groove 6-16 and below the control module mounting groove 6-17. A wire-passing groove 6-19 communicated from the battery mounting groove 6-16 to the control module mounting groove 6-17 is formed in the side surface of the external supporting ring 6-2, the wire-passing groove 6-19 extends in a horizontal direction, and a downward curved surface is formed on a lower side surface of one end of the wire-passing groove 6-19 close to the battery mounting groove 6-16, so that a wire in the battery mounting groove 6-16 can be led into the wire-passing groove 6-19 in a larger angle direction. Four protruded blocks 6-20 are uniformly distributed and formed at the upper end of the external supporting ring 6-2 circumferentially, and a large circular hole 6-21 and a small circular hole 6-22 located above the large circular hole 6-21 are formed in each of the protruded blocks 6-20.

As shown in FIG. 19, the first connecting portion 6-3 includes first side connecting plates 6-23 forming left and right side walls of the battery mounting groove 6-16, a first upper connecting plate 6-24 forming an upper wall of the battery mounting groove 6-16, a first lower connecting plate 6-25 forming a lower wall of the battery mounting groove 6-16, and a first bottom plate 6-26 formed by the downward extension of part of the internal supporting ring 6-1 and forming one part of a bottom surface of the battery mounting groove 6-16. The first upper connecting plate 6-24 is horizontally arranged, first reinforcing ribs 6-27 are formed on an upper end face of the first upper connecting plate 6-24 close to two sides, and the first reinforcing ribs 6-27 are connected to the internal supporting ring 6-1 and the external supporting ring 6-2. A cylindrical gear base 6-28, a gear shaft 6-29 located above the gear base 6-28 and a first guide cone body 6-30 located above the gear shaft 6-29 are formed on a middle part of the first upper connecting plate 6-24, and the outer diameter of the gear shaft 6-29 is less than that of the gear base 6-28. The first guide cone body 6-30 is of a big-end-down conical structure, the outer diameter of a lower end of the first guide cone body 6-30 is less than that of the gear shaft 6-29, and an internal threaded hole is formed at the center of an upper end face of the first guide cone body 6-30. An upper end face of the gear base 6-28 is flush with an upper end face of the external supporting ring 6-2, and a side surface of the gear base 6-28 is connected to the external supporting ring 6-2. A horizontal battery baffle 6-31 is formed on the first bottom plate 6-26, charging module mounting columns 6-32 are formed at positions where the first bottom plate 6-26 is connected to the first side connecting plates 6-23 on two sides, the positions of the charging module mounting columns 6-32 are lower than the position of the battery baffle 6-31, and a threaded hole is formed at the center of each of the charging module mounting columns 6-32. Charging module baffles 6-33 are formed on the two first side connecting plates 6-23 close to the lower end, and a charging module positioning column 6-34 is formed on a middle part of the first lower connecting plate 6-25.

The second connecting portion 6-4 includes second side connecting plates 6-35 forming left and right side walls of the control module mounting groove 6-17, a second upper connecting plate 6-36 forming an upper wall of the control module mounting groove 6-17, a second lower connecting plate 6-37 forming a lower wall of the control module mounting groove 6-17, and a second bottom plate 6-38 formed by the downward extension of part of the internal supporting ring 6-1 and forming one part of a bottom surface of the control module mounting groove 6-17. The second upper connecting plate 6-36 is horizontally arranged, second reinforcing ribs 6-39 are formed on an upper end face of the second upper connecting plate 6-36 close to two sides, and the second reinforcing ribs 6-39 are connected to the internal supporting ring 6-1 and the external supporting ring 6-2. A connecting column 6-40 is formed on a middle part of the second upper connecting plate 6-36, a side surface of the connecting column 6-40 is connected to the external supporting ring 6-2, a second guide cone body 6-41 is formed at an upper end of the connecting column 40, the second guide cone body 6-41 is of a big-end-down conical structure, the outer diameter of a lower end of the second cone body 6-41 is less than that of the connecting column 6-40, and an internal threaded hole is formed at the center of an upper end face of the second guide cone body 6-41. A horizontally extending upper control module baffle 6-42 is formed in the control module mounting groove 6-17 and between the first through hole 6-13 and the second through hole 6-14, a horizontally extending middle control module baffle 6-43 is formed on a middle part in the control module mounting groove 6-17, a horizontally extending lower control module baffle 6-44 is formed in the control module mounting groove 6-17 close to a lower part, the middle part of the middle control module baffle 6-43 and the lower control module baffle 6-44 is connected to a longitudinally extending control module longitudinal baffle 45, an upper control module mounting column 6-46 is formed on a bottom surface of the control module mounting groove 6-17 and between the upper control module baffle 6-42 and the middle control module baffle 6-43, and a lower control module mounting column 6-47 is formed on the bottom surface of the control module mounting groove 6-17 close to the lower end.

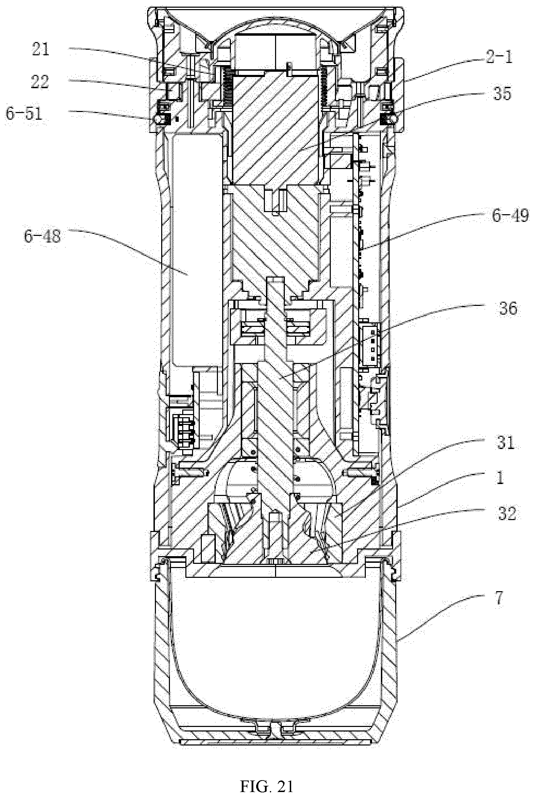

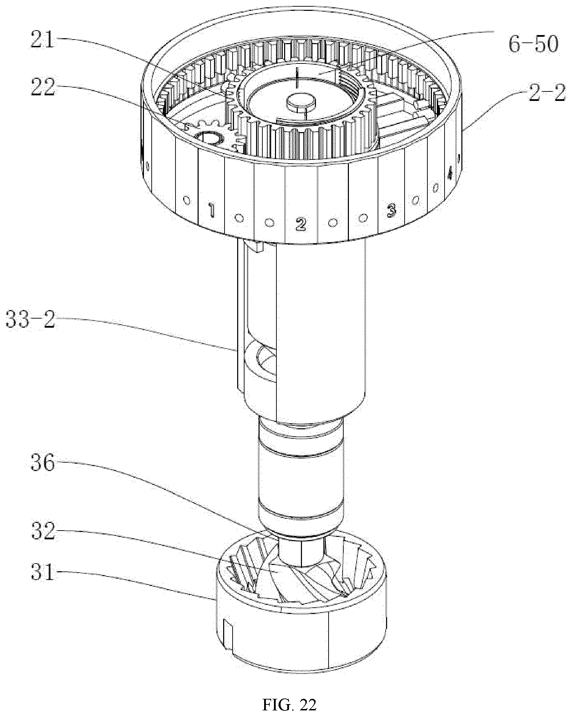

As shown in FIG. 21 and FIG. 22, resilient abutting pieces 6-51 are mounted in the large circular hole 6-21 and the small circular hole 6-22 of the battery mounting rack 6, respectively abut against the internal tooth of the adjusting knob 2-1 and an inner side ring groove of the adjusting knob 2-1, and are configured to conveniently and accurately control the rotation angle of the adjusting knob 2-1 while limiting the rotation of the adjusting knob 2-1 without axial movement. A transmission gear 22 engaged with the adjusting knob 2-1 is mounted on the gear shaft 6-29 of the battery mounting rack, an internal driving ring 21 engaged with the transmission gear 22 is mounted above the internal supporting ring 6-1 of the battery mounting rack 6, two extending sheets 6-52 are formed at the upper end of the lifting rod 33-2 and pass through the gap between the mounting disc 6-6 and the internal supporting ring 6-1 to extend to the position of the transmission gear 22, and external threads matched with internal threads of the transmission gear 22 are formed on the extending sheets 6-52.

The extending sheets 6-52 of the lifting rod 33-2 cannot rotate under the limiting action of the positioning blocks 6-5, so the lifting rod 33-2 will rotate relative to the transmission gear 22. When the lifting rod and the transmission gear rotate relatively, due to the threaded connection relationship, the lifting rod 33-2 ascends or descends and drives the connecting shaft 36 and the internal grinding disc 32 on the connecting shaft 36 to ascend and descend together, so that the gap between the internal grinding disc 32 and the external grinding disc 31 can be adjusted, and the powder coarseness of the coffee grinder can be changed.

In one embodiment, a zero adjusting nut 8 is arranged at the upper end of the lifting rod 33-2; the zero adjusting nut 8 is configured to indicate the height position of the lifting rod 33-2; the zero adjusting nut 8 is in threaded connection with the lifting rod 33-2; the zero adjusting nut 8 can prevent excessive adjustment and removal; after assembling, the initial position of the lifting rod 33-2 is adjusted by rotating the zero adjusting nut 8, thereby ensuring that the gap between the external grinding disc 31 and the internal grinding disc 32 is at the initial set position; and the initial set gap is 0.05-0.5 mm, so that the consistency of factory settings of each machine is kept high to solve the error caused by the assembling process and materials.

A conical surface matched with the opening of the adjusting knob 2-1 is formed at the upper end of the zero adjusting nut 8, and the conical surface is a guide inclined surface for guiding beans to enter the bean inlet channel, thereby guiding the beans to fall into the bean inlet channel and preventing the beans from being clamped in the gap of the adjusting assembly.

## Claims

1. A high-precision externally-adjustable coffee grinder, comprising a main housing (1), a grinding assembly and a coarseness adjusting structure, wherein the coarseness adjusting structure is configured to adjust a bean-grinding gap of the grinding assembly; the grinding assembly comprises an internal grinding disc (32) and an external grinding disc (31); the coarseness adjusting structure comprises an external adjusting ring (2-2) rotating relative to the main housing (1) and a lifting rod (33-2)
**characterized in that** the external adjusting ring (2-2) comprises an internal toothed ring (201),
the coarseness adjusting structure further comprises an internal driving ring (21) and a transmission gear (22), the internal driving ring (21) and the external adjusting ring (2-2) being arranged coaxially, the internal driving ring (21) comprising an external toothed ring (206), and the internal toothed ring (201) of the external adjusting ring (2-2) being engaged with an external toothed ring (202) of the internal driving ring (21) through the transmission gear (22), the internal driving ring (21) drives the internal grinding disc (32) or the external grinding disc (31) of the grinding assembly through the lifting rod (33-2) to ascend and descend to adjust the gap.

2. The high-precision externally-adjustable coffee grinder according to claim 1, wherein the reduction ratio of the external adjusting ring (2-2) to the internal driving ring (21) is less than or equal to 1:1.4.

3. The high-precision externally-adjustable coffee grinder according to claim 2, wherein the reduction ratio of the external adjusting ring (2-2) to the internal driving ring (21) is less than or equal to 1:1.6 and greater than or equal to 1:3.

4. The high-precision externally-adjustable coffee grinder according to any of claims 1 to 3, wherein the external adjusting ring (2-2) is arranged in fit with the main housing (1), and adjusting scales (23) are distributed circumferentially; a mounting bracket (34) is arranged in the main housing (1); the external adjusting ring (2-2) is provided with a rolling groove (24); and the mounting bracket (34) is provided with a first bead assembly (25) in rolling fit with the rolling groove (24).

5. The high-precision externally-adjustable coffee grinder according to claim 4, wherein the mounting bracket (34) is further provided with a second bead assembly (26) in fit with the internal toothed ring (201) or a gear groove (27) of the external adjusting ring (2-2), and the gear groove (27) comprises several arc-shaped grooves (28) arranged circumferentially.

6. The high-precision externally-adjustable coffee grinder according to any of claims 1 to 3, wherein the lifting rod (33-2) is a driving sleeve rod (33-1), the driving sleeve rod (33-1) is configured to drive the external grinding disc (31) or the internal grinding disc (32) to move axially, the mounting bracket (34) is arranged in the main housing (1), the driving sleeve rod (33-1) and the mounting bracket (34) are arranged in a sliding manner, the driving sleeve rod (33-1) is restricted from rotating in the main housing (1), the driving sleeve rod (33-1) is in threaded connection with the internal driving ring (21), and the driving sleeve rod (33-1) is driven to move up and down axially when the external adjusting ring (2-2) drives the internal driving ring (21) to rotate.

7. The high-precision externally-adjustable coffee grinder according to claim 6, wherein a driving motor (35) is fixed on the mounting bracket (34), the internal grinding disc (32) is provided with a connecting shaft (36), an output end of the driving motor (35) is connected to the connecting shaft (36), the driving motor (35) drives the connecting shaft (36) to rotate, a grinding disc bracket (4) is arranged in the main housing (1), the connecting shaft (36) is sleeved on the grinding disc bracket (4), the connecting shaft (36) and the output end of the driving motor (35) are arranged in an axial sliding manner, and one end of the driving sleeve rod (33-1) is axially and fixedly connected to the connecting shaft (36).

8. The high-precision externally-adjustable coffee grinder according to claim 7, wherein a thrust spring (39) is mounted between the internal grinding disc (32) and the connecting shaft (36), a flange is arranged on a lower section of the connecting shaft (36), and a lower end face of the flange and an upper end face of the internal grinding disc (32) abut against the thrust spring (39) mutually.

9. The high-precision externally-adjustable coffee grinder according to claim 7, wherein the driving sleeve rod (33-1) comprises a connecting base (37) and is connected to the connecting shaft (36) through the connecting base (37), a first bearing (38) is arranged on the connecting base (37), the connecting shaft (36) is rotatably sleeved in the first bearing (38), a groove (361) is formed in an outer wall of the connecting shaft (36), a snap spring (362) is clamped in the groove (361), the snap spring (362) abuts against an upper end face of the first bearing (38) of the driving sleeve rod (36), the thrust spring (39) is sleeved on the connecting shaft (36), one end of the thrust spring (39) abuts against the internal grinding disc (32), one end of the thrust spring (39) and the grinding disc bracket (4) abut against each other, and the thrust spring (39) provides a downward thrust of the connecting shaft (36).

10. The high-precision externally-adjustable coffee grinder according to claim 4, wherein a bean bin cover bracket (51) is arranged above the main housing (1), the bean bin cover bracket (51) is provided with a through bean inlet channel, the bean bin cover bracket (51) is connected to a cover plate (52) for closing the bean inlet channel, a bean inlet through hole (521) is formed in the cover plate (52), the bean bin cover bracket (51) comprises a first height position and a second height position, a bean feeding gap (53) communicating with the bean inlet channel is formed between the bean inlet through hole (521) of the cover plate (52) and the bean bin cover bracket (51) when the cover plate (52) is located at the first height position, and the bean inlet through hole (521) of the cover plate (52) abuts against the bean bin cover bracket (51) to close the bean inlet channel when the cover plate (52) is located at the second height position.

11. The high-precision externally-adjustable coffee grinder according to claim 10, wherein the cover plate (52) is connected to the bean bin cover bracket (51) in a sliding manner, the cover plate (52) or the bean bin cover bracket (51) is provided with a sliding groove (58), the corresponding bean bin cover bracket (51) or cover plate (52) is provided with a sliding block, the sliding groove (58) is an axially extending linear groove or a spirally extending inclined groove, and one end of the sliding groove (58) close to the first height position laterally extends to form a second positioning groove (59).

12. The high-precision externally-adjustable coffee grinder according to claim 10, wherein the cover plate (52) is provided with a washer (523) at a lower end of the bean inlet through hole (521), the washer (523) is made of a deformable resilient material, the cover plate (52) comprises a guide plate (522) for covering the bean inlet channel, the guide plate (522) is bent towards an inner side and extends at the position of the bean inlet through hole (521) to be provided with a connecting portion (524), the washer (523) is provided with a connecting groove (525) in fit with the connecting portion (524), and the washer (523) is connected to the connecting portion (524) through the connecting groove (525).

13. The high-precision externally-adjustable coffee grinder according to claim 7, wherein the grinding disc bracket (4) is integrally formed, the grinding disc bracket (4) is provided with an external grinding disc mounting hole (41) and a connecting shaft mounting hole (42), two coaxially arranged second bearings (43) are arranged in the connecting shaft mounting hole (42), and the connecting shaft (36) penetrates through the second bearings (43);
wherein the external grinding disc mounting hole (41) and the connecting shaft mounting hole (42) are formed through milling on one side by a milling machine device;
wherein the connecting shaft mounting hole (42) comprises two bearing mounting positions (421), and hole walls of the bearing mounting positions (421) and a hole wall of the connecting shaft mounting hole (42) are arranged in a continuously straight line;
wherein a positioning ring (44) is arranged between the two second bearings (43).

14. The high-precision externally-adjustable coffee grinder according to claim 13, wherein the connecting shaft mounting hole (42) comprises two bearing mounting positions (421), and hole walls of the bearing mounting positions (421) and a hole wall of the connecting shaft mounting hole (42) are arranged in a continuously straight line;
wherein the grinding disc bracket (4) comprises a lower mounting cylinder (47) and an upper mounting cylinder (45), the external grinding disc mounting hole (41) is formed in the lower mounting cylinder (47), the connecting shaft mounting hole (42) is formed in the upper mounting cylinder (45), the upper mounting cylinder (45) and the lower mounting cylinder (47) are connected through connecting ribs (46), a bean inlet channel for communicating with the lower mounting cylinder (47) is formed among several connecting ribs (46), an upper end face of the lower mounting cylinder (47) extends to form a first protruded ring (471), and an upper end face of the first protruded ring (471) forms a smooth and downward inclined guide curved surface (472) at the bean inlet channel.

15. The high-precision externally-adjustable coffee grinder according to claim 14, wherein a lower base (48) is arranged at a lower end of the grinding disc bracket (4), the lower base (48) is provided with a powder outlet guide retaining ring (481), an inner side surface of the powder outlet guide retaining ring (481) is an arc surface radially enlarged from top to bottom, a lower end face of the lower base (48) is provided with a mounting groove (482) connected to a powder receiving box (7), and the position of the mounting groove (482) is higher than the powder outlet guide retaining ring (481).

## Patentansprüche

1. Extern einstellbare Hochpräzisionskaffeemühle, umfassend ein Hauptgehäuse (1), eine Mahlbaugruppe und eine Feinheitseinstellstruktur, wobei die Feinheitseinstellstruktur dazu ausgestaltet ist, einen Bohnenmahlspalt der Mahlbaugruppe einzustellen; wobei die Mahlbaugruppe eine interne Mahlscheibe (32) und eine externe Mahlscheibe (31) umfasst; wobei die Feinheitseinstellstruktur einen Ring (2-2) zum externen Einstellen, der sich relativ zum Hauptgehäuse (1) dreht, und eine Hebestange (33-2) umfasst, **dadurch gekennzeichnet, dass** der Ring (2-2) zum externen Einstellen einen internen Zahnring (201) umfasst,
wobei die Feinheitseinstellstruktur ferner einen internen Antriebsring (21) und ein Getriebezahnrad (22) umfasst, wobei der interne Antriebsring (21) und der Ring (2-2) zum externen Einstellen koaxial angeordnet sind, wobei der interne Antriebsring (21) einen externen Zahnring (206) umfasst und der interne Zahnring (201) des Rings (2-2) zum externen Einstellen mit einem externen Zahnring (202) des internen Antriebsrings (21) durch das Getriebezahnrad (22) verzahnt ist, wobei der interne Antriebsring (21) die interne Mahlscheibe (32) oder die externe Mahlscheibe (31) der Mahlbaugruppe durch die Hebestange (33-2) so antreibt, dass sie angehoben und abgesenkt wird, um den Spalt einzustellen.

2. Extern einstellbare Hochpräzisionskaffeemühle nach Anspruch 1, wobei das Untersetzungsverhältnis des Rings (2-2) zum externen Einstellen zu dem internen Antriebsring (21) kleiner oder gleich 1:1,4 ist.

3. Extern einstellbare Hochpräzisionskaffeemühle nach Anspruch 2, wobei das Untersetzungsverhältnis des Rings (2-2) zum externen Einstellen zu dem internen Antriebsring (21) kleiner oder gleich 1:1,6 und größer oder gleich 1:3 ist.

4. Extern einstellbare Hochpräzisionskaffeemühle nach einem der Ansprüche 1 bis 3, wobei der Ring (2-2) zum externen Einstellen in Eingriff mit dem Hauptgehäuse (1) angeordnet ist und Einstellskalen (23) in Umfangsrichtung verteilt sind; wobei eine Montagehalterung (34) im Hauptgehäuse (1) angeordnet ist; wobei der Ring (2-2) zum externen Einstellen mit einer Rollnut (24) versehen ist; und wobei die Montagehalterung (34) mit einer ersten Kugelbaugruppe (25) versehen ist, die in Rolleingriff mit der Rollnut (24) steht.

5. Extern einstellbare Hochpräzisionskaffeemühle nach Anspruch 4, wobei die Montagehalterung (34) ferner mit einer zweiten Kugelbaugruppe (26) versehen ist, die mit dem internen Zahnring (201) oder einer Zahnradnut (27) des Rings (2-2) zum externen Einstellen in Eingriff steht, und wobei die Zahnradnut (27) mehrere in Umfangsrichtung angeordnete bogenförmige Nuten (28) umfasst.

6. Extern einstellbare Hochpräzisionskaffeemühle nach einem der Ansprüche 1 bis 3, wobei die Hebestange (33-2) eine Antriebshülsenstange (33-1) ist, wobei die Antriebshülsenstange (33-1) dazu ausgestaltet ist, die externe Mahlscheibe (31) oder die interne Mahlscheibe (32) zur axialen Bewegung anzutreiben, wobei die Montagehalterung (34) im Hauptgehäuse (1) angeordnet ist, wobei die Antriebshülsenstange (33-1) und die Montagehalterung (34) gleitend angeordnet sind, wobei die Antriebshülsenstange (33-1) daran gehindert wird, sich im Hauptgehäuse (1) zu drehen, wobei die Antriebshülsenstange (33-1) mit dem internen Antriebsring (21) in Gewindeverbindung steht, und wobei die Antriebshülsenstange (33-1) so angetrieben wird, dass sie sich axial auf und ab bewegt, wenn der Ring (2-2) zum externen Einstellen den internen Antriebsring (21) drehend antreibt.

7. Extern einstellbare Hochpräzisionskaffeemühle nach Anspruch 6, wobei ein Antriebsmotor (35) an der Montagehalterung (34) fixiert ist, wobei die interne Mahlscheibe (32) mit einem Verbindungswelle(36) versehen ist, wobei ein Ausgangsende des Antriebsmotors (35) mit der Verbindungswelle (36) verbunden ist, wobei der Antriebsmotor (35) die Verbindungswelle (36) drehend antreibt, wobei eine Mahlscheibenhalterung (4) im Hauptgehäuse (1) angeordnet ist, wobei die Verbindungswelle (36) auf die Mahlscheibenhalterung (4) aufgesetzt ist, wobei die Verbindungswelle (36) und das Ausgangsende des Antriebsmotors (35) axial gleitend angeordnet sind und ein Ende der Antriebshülsenstange (33-1) mit der Verbindungswelle (36) axial fest verbunden ist.

8. Extern einstellbare Hochpräzisionskaffeemühle nach Anspruch 7, wobei eine Schubfeder (39) zwischen die interne Mahlscheibe (32) und die Verbindungswelle (36) montiert ist, ein Flansch an einem unteren Teil der Verbindungswelle (36) angeordnet ist und eine untere Endfläche des Flansches und eine obere Endfläche der internen Mahlscheibe (32) gegenseitig an der Schubfeder (39) anliegen.

9. Extern einstellbare Hochpräzisionskaffeemühle nach Anspruch 7, wobei die Antriebshülsenstange (33-1) einen Verbindungssockel (37) umfasst und durch den Verbindungssockel (37) mit der Verbindungswelle (36) verbunden ist, wobei ein erstes Lager (38) an dem Verbindungssockel (37) angeordnet ist, wobei die Verbindungswelle (36) drehbar in das erste Lager (38) eingesteckt ist, wobei eine Nut (361) in einer Außenwand der Verbindungswelle (36) gebildet ist, wobei eine Schnappfeder (362) in die Nut (361) geklemmt ist, wobei die Schnappfeder (362) an einer oberen Endfläche des ersten Lagers (38) der Antriebshülsenstange (36) anliegt, wobei die Schubfeder (39) auf die Verbindungswelle (36) aufgesteckt ist, wobei ein Ende der Schubfeder (39) an der internen Mahlscheibe (32) anliegt, wobei ein Ende der Schubfeder (39) und die Mahlscheibenhalterung (4) aneinander anliegen, und wobei die Schubfeder (39) einen Abwärtsschub auf die Verbindungswelle (36) ausübt.

10. Extern einstellbare Hochpräzisionskaffeemühle nach Anspruch 4, wobei eine Bohnenbehälterabdeckungshalterung (51) über dem Hauptgehäuse (1) angeordnet ist, wobei die Bohnenbehälterabdeckungshalterung (51) mit einem Bohneneinlasskanal versehen ist, wobei die Bohnenbehälterabdeckungshalterung (51) mit einer Abdeckplatte (52) zum Schließen des Bohneneinlasskanals verbunden ist, wobei ein Bohneneinlassdurchgangsloch (521) in der Abdeckplatte (52) gebildet ist, wobei die Bohnenbehälterabdeckungshalterung (51) eine erste Höhenposition und eine zweite Höhenposition umfasst, wobei ein Bohnenzufuhrspalt (53), der mit dem Bohneneinlasskanal in Verbindung steht, zwischen dem Bohneneinlassdurchgangsloch (521) der Abdeckplatte (52) und der Bohnenbehälterabdeckungshalterung (51) gebildet ist, wenn sich die Abdeckplatte (52) in der ersten Höhenposition befindet, und wobei das Bohneneinlassdurchgangsloch (521) der Abdeckplatte (52) an der Bohnenbehälterabdeckungshalterung (51) anliegt, um den Bohneneinlasskanal zu schließen, wenn sich die Abdeckplatte (52) in der zweiten Höhenposition befindet.

11. Extern einstellbare Hochpräzisionskaffeemühle nach Anspruch 10, wobei die Abdeckplatte (52) gleitend mit der Bohnenbehälterabdeckungshalterung (51) verbunden ist, wobei die Abdeckplatte (52) oder die Bohnenbehälterabdeckungshalterung (51) mit einer Gleitnut (58) versehen ist, die entsprechende Bohnenbehälterabdeckungshalterung (51) oder Abdeckplatte (52) mit einem Gleitblock versehen ist, die Gleitnut (58) eine sich axial erstreckende lineare Nut oder eine sich spiralförmig erstreckende schräge Nut ist und sich ein Ende der Gleitnut (58), das nah an der der ersten Höhenposition liegt, lateral erstreckt, um eine zweite Positionierungsnut (59) zu bilden.

12. Extern einstellbare Hochpräzisionskaffeemühle nach Anspruch 10, wobei die Abdeckplatte (52) mit einer Unterlegscheibe (523) an einem unteren Ende des Bohneneinlassdurchgangslochs (521) versehen ist, wobei die Unterlegscheibe (523) aus einem verformbaren elastischen Material hergestellt ist, wobei die Abdeckplatte (52) eine Führungsplatte (522) zum Abdecken des Bohneneinlasskanals umfasst, wobei die Führungsplatte (522) nach innen gebogen ist und sich an der Position des Bohneneinlassdurchgangslochs (521) so erstreckt, dass sie mit einem Verbindungsabschnitt (524) versehen ist, wobei die Unterlegscheibe (523) mit einer Verbindungsnut (525) versehen ist, die mit dem Verbindungsabschnitt (524) zusammengefügt ist, und wobei die Unterlegscheibe (523) durch die Verbindungsnut (525) mit dem Verbindungsabschnitt (524) verbunden ist.

13. Extern einstellbare Hochpräzisionskaffeemühle nach Anspruch 7, wobei die Mahlscheibenhalterung (4) einstückig gebildet ist, wobei die Mahlscheibenhalterung (4) mit einem Loch (41) zum Montieren einer externen Mahlscheibe und einem Verbindungswellenmontageloch (42) versehen ist, wobei zwei koaxial angeordnete zweite Lager (43) in dem Verbindungswellenmontageloch (42) angeordnet sind und die Verbindungswelle (36) durch die zweiten Lager (43) hindurch verläuft;
wobei das Loch (41) zum Montieren einer externen Mahlscheibe und das Verbindungswellenmontageloch (42) durch Fräsen auf einer Seite mithilfe einer Fräsmaschinenvorrichtung gebildet sind;
wobei das Verbindungswellenmontageloch (42) zwei Lagermontagepositionen (421) umfasst und Lochwände der Lagermontagepositionen (421) und eine Lochwand des Verbindungswellenmontagelochs (42) an einer fortlaufenden Geraden angeordnet sind;
wobei ein Positionierungsring (44) zwischen den zwei zweiten Lagern (43) angeordnet ist.

14. Extern einstellbare Hochpräzisionskaffeemühle nach Anspruch 13, wobei das Verbindungswellenmontageloch (42) zwei Lagermontagepositionen (421) umfasst und Lochwände der Lagermontagepositionen (421) und eine Lochwand des Verbindungswellenmontagelochs (42) an einer fortlaufenden Geraden angeordnet sind;
wobei die Mahlscheibenhalterung (4) einen unteren Montagezylinder (47) und einen oberen Montagezylinder (45) umfasst, wobei das Loch (41) zum Montieren einer externen Mahlscheibe im unteren Montagezylinder (47) gebildet ist, das Verbindungswellenmontageloch (42) im oberen Montagezylinder (45) gebildet ist und der obere Montagezylinder (45) und der untere Montagezylinder (47) durch Verbindungsrippen (46) verbunden sind, wobei ein Bohneneinlasskanal zum Verbinden mit dem unteren Montagezylinder (47) zwischen mehreren Verbindungsrippen (46) gebildet ist, wobei sich eine obere Endfläche des unteren Montagezylinders (47) so erstreckt, dass ein erste vorspringender Ring (471) gebildet wird, und eine obere Endfläche des ersten vorspringenden Rings (471) eine glatte, nach unten geneigte gekrümmte Führungsfläche (472) am Bohneneinlasskanal bildet.

15. Extern einstellbare Hochpräzisionskaffeemühle nach Anspruch 14, wobei ein unterer Sockel (48) an einem unteren Ende der Mahlscheibenhalterung (4) angeordnet ist, wobei der untere Sockel (48) mit einem Pulverauslassführungshaltering (481) versehen ist, wobei eine Innenfläche des Pulverauslassführungshalterings (481) eine Bogenfläche ist, die sich von oben nach unten radial vergrößert, wobei eine untere Endfläche des unteren Sockels (48) mit einer Montagenut (482) versehen ist, die mit einem Pulveraufnahmekasten (7) verbunden ist, und die Position der Montagenut (482) höher als die Position des Pulverauslassführungshalterings (481) ist.

## Revendications

1. Un moulin à café réglable de l'extérieur de haute précision, comprenant un corps principal (1), un ensemble de mouture et une structure de réglage de la grossièreté, dans lequel la structure de réglage de la grossièreté est configurée pour ajuster un espace de mouture des grains dans l'ensemble de mouture ; l'ensemble de mouture comprend un disque de mouture interne (32) et un disque de mouture externe (31) ; la structure de réglage de la grossièreté comprend une bague de réglage externe (2-2) tournant par rapport au corps principal (1) et une tige de levage (33-2) **caractérisé en ce que** la bague de réglage externe (2-2) est constituée d'une bague intérieure dentée (201),
la structure de réglage de la grossièreté comprend en outre une bague d'entraînement interne (21) et un engrenage de transmission (22), la bague d'entraînement interne (21) et la bague de réglage externe (2-2) étant disposées coaxialement, la bague d'entraînement interne (21) comprenant une bague extérieure dentée (206), et la bague intérieure dentée (201) de la bague de réglage externe (2-2) étant engagée avec une bague extérieure dentée (202) de la bague d'entraînement interne (21) via l'engrenage de transmission (22), la bague d'entraînement interne (21) entraîne le disque de mouture interne (32) ou le disque de mouture externe (31) de l'ensemble de mouture à travers la tige de levage (33-2) pour monter et descendre afin d'ajuster l'espace.

2. Le moulin à café réglable de l'extérieur de haute précision selon la revendication 1, dans lequel le rapport de réduction de la bague de réglage externe (2-2) à la bague d'entraînement interne (21) est inférieur ou égal à 1:1,4.

3. Le moulin à café réglable de l'extérieur de haute précision selon la revendication 2, dans lequel le rapport de réduction de la bague de réglage externe (2-2) à la bague d'entraînement interne (21) est inférieur ou égal à 1:1,6 et supérieur ou égal à 1:3.

4. Le moulin à café réglable de l'extérieur de haute précision selon les revendications 1 à 3, dans lequel la bague de réglage externe (2-2) est disposée en ajustement avec le corps principal (1), et les échelles de réglage (23) sont réparties circonférentiellement ; un support de montage (34) est installé dans le corps principal (1) ; la bague de réglage externe (2-2) est munie d'une rainure de palier (24) ; et le support de montage (34) est doté d'un premier ensemble de billes (25) en ajustement par palier avec la rainure de palier (24).

5. Le moulin à café réglable de l'extérieur de haute précision selon la revendication 4, dans lequel le support de montage (34) est en outre doté d'un deuxième ensemble de billes (26) en ajustement avec la bague intérieure dentée (201) ou une rainure d'engrenage (27) de la bague de réglage externe (2-2), et la rainure d'engrenage (27) comprend plusieurs rainures en forme d'arc (28) disposées circonférentiellement.

6. Le moulin à café réglable de l'extérieur de haute précision selon les revendications 1 à 3, dans lequel la tige de levage (33-2) est une tige de manchon d'entraînement (33-1), la tige de manchon d'entraînement (33-1) est configurée pour entraîner le disque de mouture externe (31) ou le disque de mouture interne (32) pour se déplacer axialement, le support de montage (34) est disposé dans le corps principal (1), la tige de manchon d'entraînement (33-1) et le support de montage (34) sont disposés de manière coulissante, la tige de manchon d'entraînement (33-1) est empêchée de tourner dans le corps principal (1), la tige de manchon d'entraînement (33-1) est en raccordement filetée avec la bague d'entraînement interne (21), et la tige de manchon d'entraînement (33-1) est entraînée pour se déplacer axialement de haut en bas lorsque la bague de réglage externe (2-2) entraîne la rotation de la bague d'entraînement interne (21).

7. Le moulin à café réglable de l'extérieur de haute précision selon la revendication 6, dans lequel un moteur d'entraînement (35) est fixé sur le support de montage (34), le disque de mouture interne (32) est doté d'un arbre de liaison (36), une extrémité de sortie du moteur d'entraînement (35) est reliée à l'arbre de liaison (36), le moteur d'entraînement (35) entraîne l'arbre de jonction (36) pour qu'il tourne, Un support de disque meulé (4) est disposé dans le corps principal (1), l'arbre de jonction (36) est protégé par un manchon sur le support du disque meulé (4), l'arbre de jonction (36) et l'extrémité de sortie du moteur d'entraînement (35) sont disposés de manière axiale glissante, et une extrémité de la tige de manchon d'entraînement (33-1) est fixement et axialement reliée à l'arbre de jonction (36).

8. Le moulin à café réglable de l'extérieur de haute précision selon la revendication 7, dans lequel un ressort de poussée (39) est monté entre le disque de mouture interne (32) et l'arbre de raccordement (36), une bride est disposée sur une partie inférieure de l'arbre de raccordement (36), et une face inférieure de la bride ainsi qu'une face supérieure du disque de mouture interne (32) sont adossées mutuellement au ressort de poussée (39).

9. Le moulin à café réglable de l'extérieur de haute précision selon la revendication 7, dans lequel la tige de manche d'entraînement (33-1) est composée d'une base de raccordement (37) et est reliée à l'arbre de raccordement (36) via la base de raccordement (37), un premier palier (38) est disposé sur la base de raccordement (37), l'arbre de jonction (36) est retenu de façon rotative dans le premier palier (38), une rainure (361) est formée dans une paroi extérieure de l'arbre de raccordement (36), un ressort d'encliquetage (362) est fixé dans la rainure (361), le ressort d'encliquetage (362) est en butée contre une face supérieure du premier palier (38) de la tige de manchon d'entraînement (36), le ressort de poussée (39) est manchonné sur l'arbre de raccordement (36), une extrémité du ressort de poussée (39) est en butée contre le disque de mouture interne (32), une extrémité du ressort de poussée (39) et le support du disque de mouture (4) sont en butée l'un contre l'autre, et le ressort de poussée (39) assure une poussée descendante de l'arbre de raccordement (36).

10. Le moulin à café réglable de l'extérieur de haute précision selon la revendication 4, dans lequel un support de couvercle de bac à grains (51) est disposé au-dessus du corps principal (1), le support de couvercle de bac à grains (51) est doté d'un canal d'entrée de grains traversant, le support de couvercle de bac à grains (51) est relié à une plaque de couverture (52) pour fermer le canal d'entrée des grains, un trou d'entrée pour grains (521) est formé dans la plaque de couverture (52), le support de couvercle du bac à grains (51) comprend une première position en hauteur et une deuxième position en hauteur, un espace d'alimentation pour grains (53) communiquant avec le canal d'entrée des grains est formé entre le trou d'entrée (521) de la plaque de couverture (52) et le support de couvercle du bac à grains (51) lorsque la plaque de couverture (52) est située à la première position en hauteur, et le trou d'entrée de grains (521) de la plaque de couverture (52) est en butée contre le support du couvercle du bac à grains (51) pour fermer le canal d'entrée lorsque la plaque de couverture (52) est située à la deuxième position en hauteur.

11. Le moulin à café réglable de l'extérieur de haute précision selon la revendication 10, dans lequel la plaque de couverture (52) est reliée de manière coulissante au support du couvercle du bac à grains (51), la plaque de couverture (52) ou le support du couvercle du bac à grains (51) est doté d'une rainure de coulissement (58), le support correspondant du couvercle du bac à grains (51) ou de la plaque de couverture (52) est doté d'un bloc coulissant, la rainure de coulissement (58) est une rainure linéaire à extension axiale ou une rainure inclinée à extension en spirale, et une extrémité de la rainure de coulissement (58) proche de la première position en hauteur s'étend latéralement pour former une deuxième rainure de positionnement (59).

12. Le moulin à café réglable de l'extérieur de haute précision selon la revendication 10, dans lequel la plaque de couverture (52) est dotée d'une rondelle (523) à une extrémité inférieure du trou d'entrée de grains traversant (521), la rondelle (523) est fabriquée en matériau déformable et résilient, la plaque de couverture (522) comprend une plaque de guidage (522) pour recouvrir le canal d'entrée des grains, la plaque de guidage (522) est courbée vers un côté intérieur et s'étend à la position du trou d'entrée de grains (521) pour être dotée d'une partie de raccordement (524), la rondelle (523) est dotée d'une rainure de raccordement (525) en ajustement avec la partie de raccordement (524), et la rondelle (523) est reliée à la partie de raccordement (524) via la rainure de raccordement (525).

13. Le moulin à café réglable de l'extérieur de haute précision selon la revendication 7, dans lequel le support du disque de mouture (4) est formé intégralement, le support du disque de mouture (4) est muni d'un trou de montage de disque de mouture externe (41) et d'un trou de montage de l'arbre de raccordement (42), deux deuxièmes paliers agencés coaxialement (43) sont disposés dans le trou de montage de l'arbre de raccordement (42), et l'arbre de raccordement (36) traverse les deuxièmes paliers (43) ;
dans lequel le trou de montage du disque de mouture externe (41) et celui de l'arbre de raccordement (42) sont formés par meulage d'un côté par un dispositif de meulage ;
dans lequel le trou de montage de l'arbre de raccordement (42) comprend deux positions de montage des paliers (421), et les parois du trou des positions de montage des paliers (421) et la paroi du trou de montage de l'arbre de raccordement (42) sont disposées en ligne droite continue ;
dans lequel une bague de positionnement (44) est disposée entre les deux deuxièmes paliers (43).

14. Le moulin à café réglable de l'extérieur de haute précision selon la revendication 13, dans lequel le trou de montage de l'arbre de raccordement (42) comprend deux positions de montage (421), et les parois des positions de montage des paliers (421) et une paroi du trou de montage de l'arbre de raccordement (42) sont disposées en ligne droite continue ;
dans lequel le support du disque de meulage (4) comprend un cylindre de montage inférieur (47) et un cylindre de montage supérieur (45), le trou de montage externe du disque de meulage (41) est formé dans le cylindre inférieur (47), le trou de montage de l'arbre de raccordement (42) est formé dans le cylindre de montage supérieur (45), le cylindre de montage supérieur (45) et le cylindre de montage inférieur (47) sont reliés par des nervures de raccordement (46), un canal d'entrée de grains pour communiquer avec le cylindre de montage inférieur (47) est formé par plusieurs nervures de raccordement (46), une face supérieure du cylindre inférieur (47) s'étend pour former une première bague saillante (471), et une face supérieure de la première bague saillante (471) forme une surface courbe lisse et inclinée vers le bas (472) au niveau du canal d'entrée des grains.

15. Le moulin à café réglable de l'extérieur de haute précision selon la revendication 14, dans lequel une base inférieure (48) est disposée à une extrémité inférieure du support du disque de mouture (4), la base inférieure (48) est dotée d'une bague de retenue de guidage de sortie de poudre (481), une surface latérale intérieure de la bague de retenue de guidage de sortie de poudre (481) est une surface d'arc agrandie radialement de haut en bas, une face d'extrémité inférieure de la base inférieure (48) est dotée d'une rainure de montage (482) reliée à une boîte de réception de poudre (7), et la position de la rainure de montage (482) est plus haute que celle de la bague de retenue de guidage de la sortie de poudre (481).
